# EUROPÄISCHE PATENTSCHRIFT

(11) **EP 0 783 537 B1**
(45) Veröffentlichungstag und Bekanntmachung des Hinweises auf die Patenterteilung: **01.12.1999**
(21) Anmeldenummer: 95930362.9
(22) Anmeldetag: 19.09.1995
(51) Int. Cl.: C08F 246/00, G02F 1/1337

(54) **CUMARIN- UND CHINOLINON-DERIVATE ZUR HERSTELLUNG VON ORIENTIERUNGSSCHICHTEN FÜR FLÜSSIGKRISTALLE**
CUMARIN AND QUINOLINONE DERIVATIVES FOR PREPARING LIQUID CRYSTAL ORIENTATION LAYERS
DERIVES DE LA COUMARINE ET DE LA QUINOLINONE UTILISES DANS LA FABRICATION DE COUCHES D'ORIENTATION POUR CRISTAUX LIQUIDES

(30) Priorität: 29.09.1994 CH 295194
(43) Veröffentlichungstag der Anmeldung: 16.07.1997
(73) Patentinhaber: Rolic AG, 6301 Zug (CH)
(72) Erfinder: HERR, Rolf-Peter, D-79100 Freiburg (DE); HERZOG, François, F-68120 Richwiller (FR); SCHUSTER, Andreas, D-79110 Freiburg (DE)
(74) Vertreter: England, Christopher David
(86) Internationale Anmeldenummer: CH9500209
(87) Internationale Veröffentlichungsnummer: WO9610049

(56) Entgegenhaltungen:
- EP-A- 0 611 786
- GB-A- 959 679

## Beschreibung

Die Erfindung betrifft neue lineare und cyclische Polymere oder Oligomere von Cumarin- und Chinolinon-Derivaten mit einer photoreaktiven Ethen-Gruppe, sowie deren Verwendung als Orientierungsschicht für Flüssigkristalle.

Der Orientierungsschicht kommt in (elektro-optischen) Flüssigkristallvorrichtungen eine besondere Bedeutung zu. Sie dient dem Zweck, eine gleichmässige und störungsfreie Ausrichtung der Moleküllängsachsen und damit einen hohen Kontrast zu gewährleisten. Die Ausrichtung der Flüssigkristalle in solchen Vorrichtungen kann auf verschiedene Arten bewirkt werden. Sie erfolgt üblicherweise durch Reiben einer mit einer organischen Polymerschicht beschichteten Glasplatte oder durch schräges Bedampfen einer Glasplatte mit einer Siliziumoxid-Schicht. Auf diese Weise können hauptsächlich einheitlich ausgerichtete Schichten hergestellt werden.

Es ist jedoch auch möglich, eine strukturierte Orientierung der Flüssigkristalle zu erhalten. Dies kann beispielsweise dadurch erreicht werden, dass eine Glasplatte mit einem Polymer beschichtet wird, welchem photochemisch orientierbare Farbstoffmoleküle oder photochemisch isomerisierbare Moleküle zugemischt werden, wie dies beispielsweise in EP-A-0 445 629 beschrieben ist. Diese Methoden haben jedoch den Nachteil, dass einerseits die Löslichkeit solcher orientierbarer Moleküle im Polymer beschränkt ist, und andererseits die Stabilität der Orientierung auf Dauer nicht in genügender Weise gewährleistet ist.

Eine weitere Möglichkeit zur Erzeugung hochaufgelöster Orientierungsmuster in flüssigkristallinen Schichten ist in Jpn. J. Appl. Phys. Vol. 31 (1992), 2155 beschrieben. Bei diesem Verfahren wird die durch Bestrahlung mit linear polarisierten Licht induzierte Dimerisierung polymergebundener photoreaktiver Zimtsäuregruppen zur strukturierten Orientierung von Flüssigkristallen benutzt.

Diese Polymeren sind jedoch noch nicht optimal. Photochemische Konkurrenz- ( Neben-) reaktionen wie die trans/cis-Isomerie wirken sich störend auf die Orientierungsfähigkeit und die Langzeitstabilität aus. Beispielsweise führt eine längere UV-Licht Bestrahlung einer vorgefertigten Orientierungsschicht zur Zerstörung der ursprünglich vorhandenen Orientierung. Mehrfachbelichtungen, bei denen eine bereits bestehende Orientierungsschicht mit einem vorgegebenen eingeschriebenen Muster ein weiteres Mal belichtet wird, um die noch unbelichteten Bereiche in eine andere Richtung zu orientieren, können nur durchgeführt werden, wenn die zuvor belichteten Stellen durch eine Maske abgedeckt werden. Ansonsten können die bereits orientierten Bereiche der Schicht ihre Struktur durch photochemische Nebenreaktionen wieder verlieren.

Es stellte sich daher die Aufgabe, photoreaktive Polymere zu suchen, die zur Erzeugung hochaufgelöster Orientierungsmuster befähigt sind und zu bedeutend stabileren Orientierungsstrukturen für flüssigkristalline Materialien führen.

Überraschenderweise wurde gefunden, dass Polymere, die Cumarin- oder Chinolinon-Derivate als photoreaktive Einheiten enthalten, diese Bedingung erfüllen und sich hervorragend als Orientierungsschichten für Flüssigkristalle eignen. Neben einer bedeutend höheren (z.B. photochemischen) Stabilität der Orientierungsschicht wird auch eine wesentlich bessere Orientierung der Flüssigkristalle erreicht, die z.B. zu einem deutlich verbesserten Kontrast führt.

Gegenstand der vorliegenden Erfindung sind somit zur Herstellung von Orientierungsschichten bestimmte Polymere der allgemeinen Formel 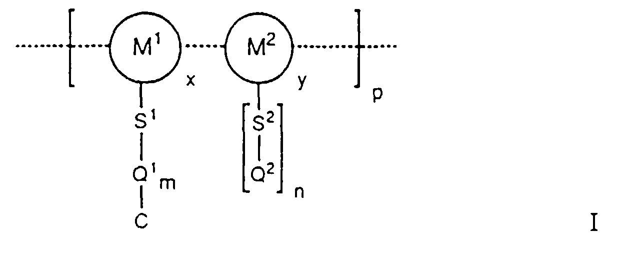 worin
- M¹ und M²: Monomereinheiten für Homo- bzw. Copolymere bedeuten;
- x und y: Molenbrüche der Comonomeren angeben, wobei jeweils 0 < x ≤ 1 und 0 ≤ y < 1 und x + y = 1 ist;
- p: 4 bis 30 000;
- S¹ und S²: unabhängig voneinander Spacereinheiten oder einfache Kovalenzbindungen;
- Q¹: eine Struktureinheit der Formel

-A-(Z¹-B)_{z}-Z²- IIa;
- Q²: eine Struktureinheit der Formel

-A-(Z¹-B)_{z}-R¹ IIb;
- A und B: unabhängig voneinander Pyridin-2,5-diyl, Pyrimidin-2,5-diyl, 1,4-Cyclohexylen, 1,3-Dioxan-2,5-diyl oder gegebenenfalls substituiertes 1,4-Phenylen;
- Z¹ und Z²: unabhängig voneinander eine einfache Kovalenzbindung, -CH₂-CH₂-, -CH₂O-, -OCH₂-, -CONR-, -RNCO-, -COO- oder -OOC-;
- R: Wasserstoff oder niederes Alkyl mit 1-5 Kohlenstoffatomen;
- R¹: Wasserstoff, gegebenenfalls substituiertes Alkyl oder Alkoxy mit jeweils 1 bis 12 Kohlenstoffatomen, Cyano, Nitro oder Halogen;
- z: 0 oder 1;
- C: ein photochemisch dimerisierbares Cumarin- oder Chinolinon-Derivat; und
- m und n: unabhängig voneinander 0 oder 1 bedeuten,
wobei [C-Q¹ₘ-S¹] nicht 7-(N-Methacryloyl)aminocumarin und 3-[p-(N-Methacryloyl)aminophenyl]cumarin darstellen darf.

In GB-A-959 679 werden Copolymerisate enthaltend 7-(-N-Methacryloyl)aminocumarin und 3-[p-(N-Methacryloyl)aminophenyl]cumarin beschrieben. Diese Copolymerisate werden in der Färbetechnik verwendet. 7-(-N-Methacryloyl)aminocumarin und 3-[p-(N-Methacryloyl)aminophenyl]cumarin sind deshalb von der Definition von [C-Q¹ₘ-S¹-] in Formel I ausgeschlossen.

Die in der allgemeinen Formel I genannten Monomereinheiten M¹ und M² sind Einheiten für die Bildung von Homopolymeren bzw. Copolymeren und haben - im Rahmen der vorliegenden Erfindung - die in der Polymerchemie üblichen Strukturen. Solche Monomereinheiten sind beispielsweise Ethylen, Acrylat, Methacrylat, 2-Chloracrylat, 2-Phenylacrylat, Acryloylphenylen, Acrylamid, Methacrylamid, 2-Chloracrylamid, 2-Phenylacrylamid, Vinylether, Vinylester, Styrol-Derivate, Maleinsäure-Derivate, Fumarsäure-Derivate, Itaconsäure-Derivate, Siloxane, Epoxide, Ethylenimin-Derivate und dergleichen.

Wenn n = 0 ist, kann M² auch Acrylnitril, Methacrylnitril, Methylacrylat, Methylmethacrylat, Hydroxyalkylacrylat oder Hydroxyalkylmethacrylat bedeuten.

Bevorzugte Monomer-Einheiten sind Ethylen, Acrylat, Methacrylat, 2-Chloracrylat, Acrylamid, Methacrylamid, 2-Chloracrylamid, Styrol, Maleinsäure oder Siloxane.

Unter dem Ausdruck "Copolymere" werden sowohl statistische, beispielsweise aus verschiedenen Acryl- und Methacrylsäure-Derivaten, als auch alternierende Copolymere, beispielsweise alternierende Copolymere aus Maleinsäure-Derivaten mit Styrol oder Vinylethern, verstanden. Vorzugsweise werden statistische Copolymere eingesetzt. Homopolymere umfassen lineare und cyclische Polymere, wie beispielsweise cyclische Polysiloxane.

S¹ und S² verknüpfen die einzelnen Einheiten untereinander. So verknüpft S¹ die Monomereinheit mit der Verbindung der Formel IIa (Q¹) oder falls m = 0 ist, mit dem Cumarin- oder Chinolinon-Derivat (C), während S² die Monomereinheit M² mit der Verbindung der Formel IIb (Q²) verknüpft. Die Verbindung Q¹ wird durch Z² mit dem Cumarin- oder Chinolinon-Derivat C verknüpft.

Der Ausdruck "Spacereinheiten" für S¹ und S² umfasst im Rahmen der vorliegenden Erfindung -(CH₂)ₛ-, -O(CH₂)ₛ-, -(CH₂)ₛO-, -O(CH₂)ₛO-, -OOC(CH₂)ₛ-, -COO(CH₂)ₛ-, -(CH₂)ₛCOO-, -(CH₂)ₛOOC- oder -(CH₂)ₛNR²-, worin s eine ganze Zahl von 1 bis 12, vorzugsweise 1 bis 8 ist, eine der -CH₂-Gruppen durch -CHR³- ersetzt sein kann, R² Wasserstoff oder niederes Alkyl, insbesondere Wasserstoff, und R³ niederes Alkyl bedeuten; Cycloalkylen mit 3 bis 8, vorzugsweise 5 oder 6, Kohlenstoffatomen; Piperidindiyl, Piperazindiyl, Phenylen, welches mit niederem Alkyl, niederem Alkoxy, Cyano, Nitro oder Halogen substituiert sein kann; weitere Spacereinheiten sind Carbonat (-OCOO-), Ester (-COO-, -OOC-), Amid (-CONR²-, -R²NCO-), Ether (-O-), Amino (-NR²-), Carboxylamin (-OCONR²-, -R²NCOO-) oder Harnstoff (-R²NCONR⁴-), wobei R⁴ Wasserstoff oder ein niederes Alkyl, insbesondere Wasserstoff bedeutet.

Spacereinheiten können insbesondere auch eine Kombination der genannten Gruppen sein. So kann beispielsweise die Amidfunktion des Acrylamids oder die Esterfunktion der Methacrylsäure als Teil des Spacers angesehen werden. Ebenso lässt sich beispielsweise eine Alkylgruppe mit einer Carboxyl-, einer Ether- oder Aminogruppe zu einem Alkylcarboxyl-, bzw. Alkyloxycarbonyl-, einem Alkoxy-, einem Alkylamino Spacer oder auch zu einem 4-Hydroxypiperidinyl Spacer zusammensetzen.

Beispiele von bevorzugten S¹ und S²-Einheiten sind die Einfachbindung, Methylen, 1,2-Ethylen, 1,3-Propylen, 1,4-Butylen, 1,5-Pentylen, 1,6-Hexylen, 1,7-Heptylen, 1,8-Octylen, 1,2-Propylen, 1,3-Butylen, Cyclopentan-1,2-diyl, Cyclopentan-1,3-diyl, Cyclohexan-1,3-diyl, Cyclohexan-1,4-diyl, Piperidin-1,4-diyl, Piperazin-1,4-diyl, 1,2-Phenylen, 1,3-Phenylen, 1,4-Phenylen, Ethylenoxy, Ethylenoxycarbonyl, Ethylencarboxyl, Propylenoxy, Propylenoxycarbonyl, Propylencarboxyl, Butylenoxy, Butylenoxycarbonyl, Butylencarboxyl, Pentylenoxy, Pentylenoxycarbonyl, Pentylencarboxyl, Hexylenoxy, Hexylenoxycarbonyl, Hexylencarboxyl, Heptylenoxy, Heptylenoxycarbonyl, Heptylencarboxyl, Octylenoxy, Octylenoxycarbonyl, Octylencarboxyl, Ethylamino, Propylamino, Butylamino, Pentylamino, Hexylamino, Heptylamino, Octylamino und dergleichen

"Niederes Alkyl" bzw. "niederes Alkoxy" bezeichnen Reste mit 1 bis 5, vorzugsweise mit 1 bis 3, Kohlenstoffatomen, wie Methyl, Ethyl, Propyl, i-Propyl, bzw. Methoxy, Ethoxy, Propyloxy oder i-Propyloxy.

Der Ausdruck "gegebenenfalls substituiertes 1,4-Phenylen" umfasst im Rahmen der Verbindungen IIa und IIb unsubstituiertes bzw. mit Halogen, vorzugsweise mit Fluor oder Chlor, oder mit Methyl, Methoxy oder Cyano einfach oder mehrfach substituiertes 1,4-Phenylen, wie beispielsweise 2- bzw. 3-Fluor-1,4-phenylen, 2,3-, 2,6- bzw. 3,5-Difluor-1,4-phenylen, 2- bzw. 3-Chlor-1,4-phenylen, 2,3-, 2,6- bzw. 3,5-Dichlor-1,4-phenylen, 2- bzw. 3-Methyl-1,4-phenylen, 2,3-, 2,6- bzw. 3,5-Dimethyl-1,4-phenylen, 2- bzw. 3-Methoxy-1,4-phenylen, 2,6- bzw. 3,5-Dimethoxy-1,4-phenylen, 2- bzw. 3-Cyano-1,4-phenylen, und dergleichen.

Der Ausdruck "gegebenenfalls substituiertes Alkyl oder Alkoxy mit jeweils 1 bis 12 Kohlenstoffatomen" bedeutet im Rahmen der vorliegenden Erfindung geradkettiges oder verzweigtes, gegebenenfalls chirales Alkyl oder Alkoxy mit 1 bis 12, vorzugsweise mit 1 bis 6, Kohlenstoffatomen, welches auch einfach oder mehrfach mit Halogen, vorzugsweise Fluor oder Chlor, oder mit Cyano substituiert sein kann. Bevorzugte Reste sind Methyl, Ethyl, Propyl, Butyl, Pentyl, Hexyl, i-Propyl, 1-Methylpropyl, 2- Methylpropyl, 1-Methylbutyl, 2-Methylbutyl, 3-Methylbutyl, 3-Methylpentyl, Methoxy, Ethoxy, Propyloxy, Butyloxy, Pentyloxy, Hexyloxy, 1-Methylpropyloxy, 2- Methylpropyloxy, 1-Methylbutyloxy, 2-Methylbutyloxy, 3-Methylbutyloxy, 1-Fluorpropyl, 1-Fluorpentyl, 2-Fluorpropyl, 2,2-Difluorpropyl, 3-Fluorpropyl, 3,3-Difluorpropyl, 3,3,3-Trifluorpropyl, 2-Fluorpropyloxy, 3-Fluorpropyloxy, Trifluormethyl, Trifluormethoxy, 1-Chlor-2-methylbutyl, 1- Cyanohexyl, 1-Chlor-2-methylbutyloxy, 1- Cyanohexyloxy, und dergleichen.

Der Ausdruck "Halogen" bezeichnet im Rahmen der vorliegenden Erfindung Fluor, Chlor, Brom und Iod, insbesondere jedoch Fluor und Chlor.

Der Ausdruck "photochemisch dimerisierbares Cumarin- oder Chinolinon-Derivat" umfasst im Rahmen der vorliegenden Erfindung Cumarin- und Chinolinon-Derivate der allgemeinen Formeln: 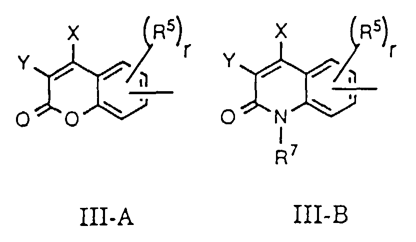 welche in 5-, 6-, 7- oder 8-Stellung mit S¹ bzw. Q¹ verknüpft sein können, und worin
- R⁵: gegebenenfalls substituiertes Alkyl oder Alkoxy mit jeweils 1 bis 12 Kohlenstoffatomen, Halogen, Cyano oder Nitro;
- R⁷: Wasserstoff oder niederes Alkyl mit 1-5 Kohlenstoffatomen
- X: Wasserstoff, Alkyl oder Alkoxy mit jeweils 1 bis 8 Kohlenstoffatomen, Trifluormethyl oder gegebenenfalls substituiertes Phenyl;
- Y: Wasserstoff, Alkyl oder Alkoxy mit jeweils 1 bis 8 Kohlenstoffatomen, Cyano oder -COOR⁶;
- R⁶: niederes Alkyl mit 1-5 Kohlenstoffatomen, und
- r: eine ganze Zahl von 1 bis 3 bedeuten.

Die Verbindungen der Formel III-A und III-B werden im Folgenden der Einfachheit halber Cumarin-Derivate genannt.

Besonders bevorzugte Polymere sind Copolymere der Formel 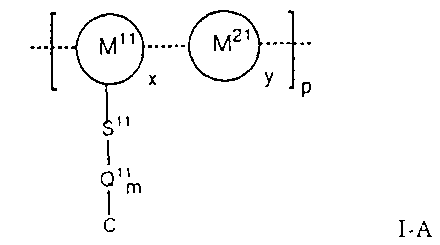 worin
- M¹¹ und M²¹: unabhängig voneinander Ethylen, Acrylat, Methacrylat, 2-Chloracrylat, Acrylamid, Methacrylamid, 2-Chloracrylamid, Styrol Maleinsäure Siloxane, und M²¹ zusätzlich auch Acrylnitril, Methacrylnitril, Methylacrylat, Methylmethacrylat, Hydroxyalkylacrylat oder Hydroxyalkylmethacrylat;
- S¹¹: eine einfache Kovalenzbindung, -(CH₂)ₜ-, -O(CH₂)ₜ-, -(CH₂)ₜO-, -O(CH₂)ₜO-, -OOC(CH₂)ₜ-, -COO(CH₂)ₜ-, -(CH₂)ₜCOO-, -(CH₂)ₜOOC-, -(CH₂)ₜNR²-, Cycloalkylen mit 5 oder 6 Kohlenstoffatomen, Piperidindiyl, Piperazindiyl, Phenylen, Carbonat (-OCOO-), Ester (-COO-, -OOC-), Amid (-CONR²-, -R²NCO-), Ether (-O-), Amino (-NR²-) oder eine Kombination dieser Gruppen;
- R²: Wasserstoff oder niederes Alkyl mit 1 - 5 Kohlenstoffatomen
- t: eine ganze Zahl von 1 bis 6;
- Q¹¹: A¹-(Z¹¹-B¹)_{z}-Z²- IIa-1
- A¹ und B¹: unabhängig voneinander 1,4-Phenylen, Pyridin-2,5-diyl, Pyrimidin-2,5-diyl, 1,4-Cyclohexylen oder 1,3-Dioxan-2,5-diyl, mit der Massgabe, dass nicht mehr als einer der Ringe A¹ und B¹ einen Heterozyklus bedeutet;
- Z¹¹: eine einfache Kovalenzbindung, -CH₂CH₂₋, -COO- oder -OOC- bedeuten; und
- p, C, Z²: und z die obengenannten Bedeutungen haben.

Besonders bezugt sind Copolymere der Formel I-A, worin M¹¹ und M²¹ unabhängig voneinander Ethylen, Acrylat, Methacrylat, Acrylamid, Methacrylamid, Styrol; und M²¹ zusätzlich auch Acrylnitril, Methacrylnitril, Methylacrylat, Methylmethacrylat, Hydroxyalkylacrylat oder Hydroxyalkylmethacrylat bedeuten; S¹¹ eine einfache Kovalenzbindung, -(CH₂)ₜ-, -O(CH₂)ₜ-, -(CH₂)ₜO-, -O(CH₂)ₜO-, -OOC(CH₂)ₜ-, -COO(CH₂)ₜ-, -(CH₂)ₜCOO-, -(CH₂)ₜOOC-, -(CH₂)ₜNR²-, Cycloalkylen mit 5 oder 6 Kohlenstoffatomen, Phenylen, Carbonat (-OCOO-), Ester (-COO-, -OOC-), Amid (-CONR²-, -R²NCO-), Ether (-O-), Amino (-NR²-) oder eine Kombination dieser Gruppen bedeutet; und A¹ und B¹ unabhangig voneinander 1,4-Phenylen, Pyridin-2,5-diyl, Pyrimidin-2,5-diyl oder 1,4-Cyclohexylen bedeuten, mit der Massgabe, dass nicht mehr als einer der Ringe A¹ und B¹ einen Heterozyklus bedeutet;

Besonders bevorzugte Copolymere sind diejenigen, worin das Cumarin-Derivat in der 6- oder 7-Stellung mit dem S¹¹ bzw. Z² verknüpft ist, es sind dies beispielsweise Copolymere der Formeln 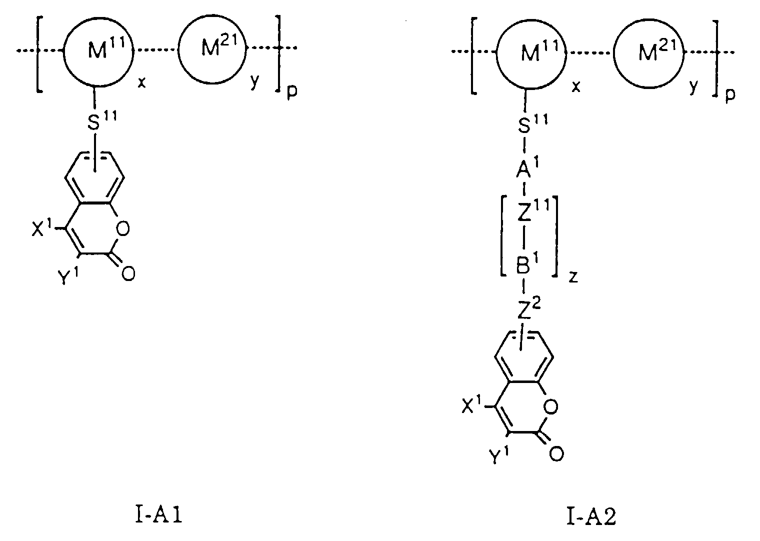 worin
- X¹: Wasserstoff, Alkyl oder Alkoxy mit jeweils 1 bis 4 Kohlenstoffatomen oder Trifluormethyl;
- Y¹: Wasserstoff, Alkyl oder Alkoxy mit jeweils 1 bis 4 Kohlenstoffatomen bedeuten; und
die übrigen Symbole die obengenannten Bedeutungen haben.

Ganz besonders bevorzugt sind Polymere der Formel I-A1 und I-A2, worin Y¹ Wasserstoff oder Alkyl mit 1 bis 4 Kohlenstoffatomen bedeutet; M¹¹ und M²¹ ELhylen, Acrylat, Methacrylat oder Styrol, und M²¹ zusätzlich auch Hydroxyalkylacrylat oder Hydroxyalkylmethacrylat bedeuten; A¹ und B¹ Phenylen oder Cyclohexylen bedeuten; und S¹² eine einfache Kovalenzbindung, -(CH₂)ₜ-, -(CH₂)ₜO-, -(CH₂)ₜCOO-, -(CH₂)ₜOOC-, -(CH₂)ₜNR²-, oder Amino (-NR²-) bedeuten.

Insbesondere werden Copolymere der Formeln I, I-A1 und I-A2 bevorzugt, worin das Cumarin-Derivat der Formel III-A in 7-Stellung mit S¹, S¹¹ bzw. mit Z² verknüpft ist; X¹ bedeutet in diesem Zusammenhang vorzugsweise Wasserstoff oder Methyl und Y¹ vorzugsweise Wasserstoff.

Besonders bevorzugte Polymere sind im Rahmen der vorliegenden Erfindung auch die Homopolymere der Formel 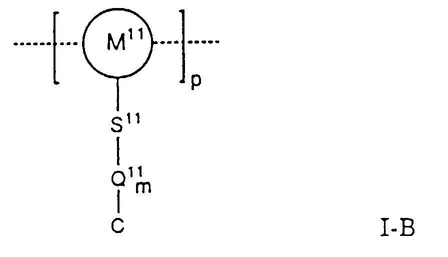 worin
- M¹¹: Ethylen, Acrylat, Methacrylat, 2-Chloracrylat, Acrylamid, Methacrylamid, 2-Chloracrylamid, Styrol Maleinsäure oder Siloxane;
- S¹¹: eine einfache Kovalenzbindung, -(CH₂)ₜ-, -O(CH₂)ₜ-, -(CH₂)ₜO-, -O(CH₂)ₜO-, -OOC(CH₂)ₜ-, -COO(CH₂)ₜ-, -(CH₂)ₜCOO-, -(CH₂)ₜOOC-, -(CH₂)ₜNR²-, Cycloalkylen mit 5 oder 6 Kohlenstoffatomen, Piperidindiyl, Piperazindiyl, Phenylen, Carbonat (-OCOO-), Ester (-COO-, -OOC-), Amid (-CONR²-, -R²NCO-), Ether (-O-), Amino (-NR²-) oder eine Kombination dieser Gruppen;
- t: eine ganze Zahl von 1 bis 6;
- Q¹¹: A¹-(Z¹¹-B¹)_{z}-Z²- IIa-1
- A¹ und B¹: unabhängig voneinander 1,4-Phenylen, Pyridin-2,5-diyl, Pyrimidin-2,5-diyl, 1,4-Cyclohexylen oder 1,3-Dioxan-2,5-diyl, mit der Massgabe, dass nicht mehr als einer der Ringe A¹ und B¹ einen Heterozyklus bedeutet;
- Z¹¹: eine einfache Kovalenzbindung, -CH₂CH₂-, -COO- oder -OOC- bedeuten; und
- R², p, C, Z² und z: die obengenannten Bedeutungen haben.

Besonders bevorzugt sind Homopolymere der Formel I-B, worin M¹¹ Ethylen, Acrylat, Methacrylat, Acrylamid, Methacrylamid, Styrol bedeuten; S¹¹ eine einfache Kovalenzbindung, -(CH₂)ₜ-, -O(CH₂)ₜ-, -(CH₂)ₜO-, -O(CH₂)ₜO-, -OOC(CH₂)ₜ-, -COO(CH₂)ₜ-, -(CH₂)ₜCOO-, -(CH₂)ₜOOC-, -(CH₂)ₜNR²-, Cycloalkylen mit 5 oder 6 Kohlenstoffatomen, Phenylen, Carbonat (-OCOO-), Ester (-COO-, -OOC-), Amid (-CONR²-, -R²NCO-), Ether (-O-), Amino (-NR²-) oder eine Kombination dieser Gruppen bedeutet; und A¹ und B¹ unabhängig voneinander 1,4-Phenylen, Pyridin-2,5-diyl, Pyrimidin-2,5-diyl oder 1,4-Cyclohexylen bedeuten, mit der Massgabe, dass nicht mehr als einer der Ringe A¹ und B¹ einen Heterozyklus bedeutet;

Beispiele besonders bevorzugter Homopolymere sind diejenigen, worin das Cumarin-Derivat in der 6- bzw. 7-Stellung mit S¹¹ bzw. Z² verknüpft ist, d.h. Verbindungen der Formeln 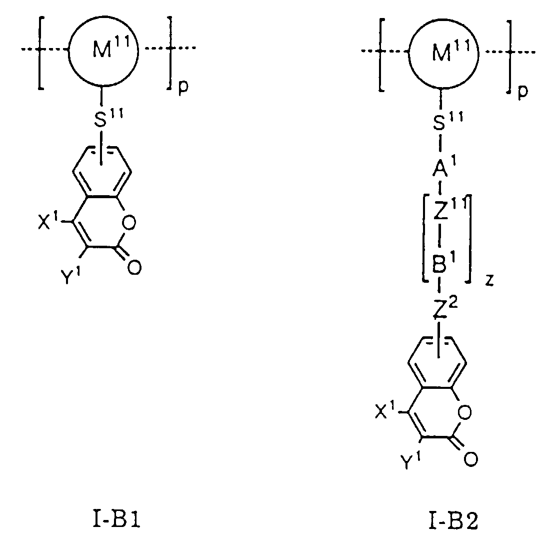 worin
- X¹: Wasserstoff, Alkyl oder Alkoxy mit jeweils 1 bis 4 Kohlenstoffatomen oder Trifluormethyl;
- Y¹: Wasserstoff, Alkyl oder Alkoxy mit jeweils 1 bis 4 Kohlenstoffatomen bedeuten; und
die übrigen Symbole die obengenannten Bedeutungen haben.

Besonders bevorzugt werden Polymere der Formeln I-B1 und I-B2, wonn X¹ Wasserstoff, Alkyl oder Alkoxy mit jeweils 1 bis 4 Kohlenstoffatomen bedeutet; Y¹ Wasserstoff oder Alkyl mit 1 bis 4 Kohlenstoffatomen bedeutet; M¹¹ Ethylen, Acrylat, Methacrylat oder Styrol bedeutet; A¹ und B¹ Phenylen oder Cyclohexylen; und S¹¹ eine einfache Kovalenzbindung, -(CH₂)ₜ-, -(CH₂)ₜO-, -(CH₂)ₜCOO-, -(CH₂)ₜOOC-, -(CH₂)ₜNR²-, oder Amino (-NR²-) bedeuten.

Insbesondere werden Homopolymere der Formeln I-B1 und I-B2 bevorzugt, worin das Cumarin-Derivat der Formel III-A in 7-Stellung mit S¹, S¹¹ bzw. mit Z² verknüpft ist; M¹¹ Ethylen, Acrylat oder Methacrylat; X¹ Wasserstoff oder Methyl; und Y¹ Wasserstoff bedeuten. In Polymeren der Formeln I-B1 und I-B2 bedeutet S¹¹ vorzugsweise eine einfache Kovalenzbindung oder -(CH₂)ₜO-; und z ist vorzugsweise 0.

Die Polymere der Formel I zeichnen sich dadurch aus, dass sie einfach zugänglich sind. Die Methoden zur Herstellung sind dem Fachmann an sich bekannt.

Die Polymeren der Formel I können prinzipiell nach zwei unterschiedlichen Verfahren hergestellt werden. Neben der direkten Polymerisation vorgefertigter Monomere besteht die Möglichkeit der polymeranalogen Umsetzung an funktionellen Polymeren.

Zur direkten Polymerisation werden die Monomere und die Comonomere zunächst aus den einzelnen Bestandteilen, d.h. aus einer Cumarineinheit der Formel III, S¹, S² , gegebenenfalls einer Struktur Q¹ bzw. Q² der Formel IIa bzw. IIb und den polymerisierbaren Teilen (M¹ oder M²) zusammengesetzt. Die Bildung der Polymere erfolgt anschliessend in an sich bekannter Weise. Die Polymerisation kann beispielsweise in der Schmelze oder aber in Lösung unter Sauerstoffausschluss und in Anwesenheit eines Radikal-Initiators, der thermisch, photochemisch oder durch eine Redox-Reaktion Radikale generieren kann, erfolgen. Die Reaktion kann in einem Temperaturbereich von -10 °C bis 120 °C, vorzugsweise in einem Bereich von 20 °C bis 100 °C, erfolgen.

Im zweiten Verfahren kann ein Polymer der Formel I auch in einer polymeranalogen Reaktion aus einem vorgefertigten funktionellen Polymer und einem geeignet funktionalisierten Cumarin-Derivat hergestellt werden. Als besonders vorteilhaft hat sich hier die Veretherung von 6- bzw. 7-Hydroxycumarin-Derivaten mit Polyhydroxyalkylacrylaten bzw. Polyhydroxyalkylmethacrylaten in Lösung unter den Bedingungen der Mitsunobu-Reaktion erwiesen. Diese Art der Umsetzung ist neu. Dabei kann man die Reaktion beispielsweise auch so führen, dass nach der Umsetzung noch freie Hydroxylgruppen am Polymer vorhanden sind, die dann in einer weiteren polymeranalogen Umsetzung weiter funktionalisiert werden können. Eine alternative Möglichkeit zur Herstellung von Copolymeren nach diesem Verfahren bietet die Verwendung von Gemischen eines Cumarin-Derivates mit weiteren phenolischen Bausteinen.

Die Cumarin-Derivate der Formel III sind in der Regel käuflich oder können nach bekannten Verfahren wie etwa der Pechmann-, der Perkin- oder der Knoevenagel-Reaktion hergestellt werden.

Die Cumarineinheiten der allgemeinen Formel III, welche vorzugsweise in 7-Stellung mit der entsprechenden Moleküleinheit verknüpft sind und deren Ethen-Gruppe unter den Herstellungsbedingungen nicht, oder nur zu einem geringen Teil in das Polymer eingebaut wird, können nach dem Auftragen der Polymerschicht auf einen Träger durch Bestrahlung mit linear polarisierten Licht dimerisiert werden. Durch die selektive Bestrahlung der Moleküleinheiten der Formel III können nun ganz bestimmte Bereiche einer Oberfläche ausgerichtet und durch die Dimerisierung gleichzeitig auch stabilisiert werden.

So kann zur Herstellung von Polymerorientierungsschichten in selektiv flächig begrenzten Bereichen beispielsweise zunächst eine Lösung des erhaltenen Polymermaterials hergestellt werden, welche in einer Spin-Coating-Apparatur auf einem, gegebenenfalls mit einer Elektrode beschichteten, Träger (z.B. mit Indium-Zinn-Oxid (ITO) beschichtete Glasplatte) aufgeschleudert wird, so dass homogene Schichten von 0,05 - 50 µm Dicke entstehen. Anschliessend können die zu orientierenden Bereiche z.B. mit einer Quecksilber-Hochdruck-Lampe, einer Xenonlampe oder einem gepulsten UV-Laser unter Verwendung eines Polarisators und gegebenenfalls einer Maske zur Abbildung von Strukturen belichtet werden. Die Belichtungsdauer ist abhängig von der Leistung der einzelnen Lampen und kann von wenigen Minuten bis zu mehreren Stunden variieren. Die Dimerisierung kann aber auch durch Bestrahlung der homogenen Schicht unter Verwendung von Filtern, die z.B. nur die für die Vernetzungsreaktion geeignete Strahlung hindurch lassen, erfolgen.

Die erfindungsgemässen Polymere werden durch die folgenden Beispiele weiter veranschaulicht. In den nachstehenden Beispielen bedeutet T_{g} die Glastemperatur, Δcₚ die Änderung der spezifischen Wärmekapazität bei konstantem Druck, log Iₒ/I die Extinktion, ε der molare dekadische Absorptionskoeffzient, C eine kristalline, G eine glasig erstarrte, LC eine flüssigkristalline, N die nematische und I die isotrope Phase.

### Beispiel 1

### Poly[1-methyl-1-(2-oxo-2H-1-benzopyran-7-yloxycarbonyl)-ethylen]

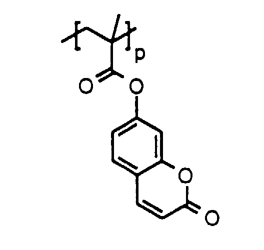

15 g (65,2 mmol) 2-Methyl-acrylsäure 2-oxo-2H-1-benzopyran-7-yl ester und 0,107 g (0,7 mmol) 2,2'-Azo-bis-isobutyronitril (AIBN) wurden in 130 ml N,N-Dimethylformamid (DMF) gelöst. Die Lösung wurde 15 Minuten mit einem schwachen Argonstrom durchspült. Anschliessend wurde das Reaktionsgefäss luftdicht verschlossen und auf 55 °C erhitzt. Nach 12 Stunden wurde das Gefäss geöffnet, die Lösung mit 80 ml DMF verdünnt und unter starkem Rühren bei Raumtemperatur in 5 l Aceton getropft. Das ausgefallene Polymer wurde abfiltriert und bei 60 °C im Wasserstrahlvakuum getrocknet. Zur weiteren Reinigung wurde das Polymer in 200 ml DMF gelöst und erneut in 5 l Aceton ausgefällt. Dieser Vorgang wurde solange wiederholt, bis dünnschichtchromatographisch kein Monomer mehr nachweisbar war. Filtrieren und Trocknen bei 60 °C im Vakuum ergaben 11,4 g Poly [1-methyl-1-(2-oxo-2H-1-benzopyran-7-yloxycarbonyl)-ethylen] als weisses Pulver mit einer Glastufe von T_{g} = 184 °C (Δcₚ = 0,33 J/gK). λ_{max.} (in CH₂Cl₂) = 308,8 nm (ε = 8130 l/mol cm) und 276,1 nm (ε = 10270 l/mol cm).

Der als Ausgangsmaterial verwendete 2-Methyl-acrylsäure 2-oxo-2H-1-benzopyran-7-yl ester wurde nach folgendem Verfahren hergestellt:

### 2-Methyl-acrylsäure 2-oxo-2H-1-benzopyran-7-yl ester

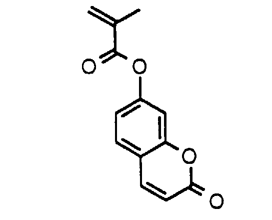

40 g (247 mmol) 7-Hydroxy-cumarin (Umbelliferon) wurden in 700 ml Tetrahydrofuran suspendiert und nacheinander mit 38 ml (271 mmol) Triethylamin und 0,603 g (5 mmol) 4-Dimethylaminopyridin (DMAP) versetzt. Zu der auf ca. 15 °C abgekühlten Suspension wurde im Laufe von 30 Minuten 28,4 g (271 mmol) Methacrylsäurechlorid getropft. Der Reaktionsansatz wurde bei Raumtemperatur 4 Stunden gerührt und anschliessend über eine dünne Kieselgelschicht filtriert. Die Kieselgelschicht wurde gründlich mit THF gespült. Nach Abdampfen des Lösungsmittels wurde das Rohprodukt in ca. 300 ml Dichlormethan gelöst und mit 1,5 1 Ethanol versetzt. Das Dichlormethan wurde am Rotationsverdampfer wieder entfernt. Aus der verbliebenen ethanolischem Lösung kristallisierte das Produkt über Nacht im Kühlschrank aus. Es wurde abfiltriert, getrocknet und ein weiteres Mal nach dem beschriebenen Verfahren aus 1,1 1 Ethanol umkristallisiert. Abfiltrieren und Trocknen bei 40 °C im Wasserstrahlvakuum ergaben 42,9 g 2-Methyl-acrylsäure 2-oxo-2H-1-benzopyran-7-yl ester als weisse Kristalle. λ_{max.} (in CH₂Cl₂) = 312,6 nm (ε = 9610 l/mol cm) und 282,3 nm (ε = 11450 l/mol cm).

In analoger Weise lassen sich folgende Polymere synthetisieren:
Poly [1-methyl-1-(4-methyl-2-oxo-2H-1-benzopyran-7-yloxycarbonyl)-ethylen], T_{g} = 201 °C;
Poly [1-methyl-1-(4-n-propyl-2-oxo-2H-1-benzopyran-7-yloxycarbonyl)-ethylen];
Poly [1-methyl-1-(4-trifluoromethyl-2-oxo-2H-1-benzopyran-7-yloxycarbonyl)-ethylen];
Poly [1-(3,4-dimethyl-2-oxo-2H-1-benzopyran-7-yloxycarbonyl)-1-methyl-ethylen];
Poly [1-(4,8-dimethyl-2-oxo-2H-1-benzopyran-7-yloxycarbonyl)-1-methyl-ethylen];
Poly[1-methyl-1-(4-phenyl-2-oxo-2H-1-benzopyran-7-yloxycarbonyl)-ethylen];
Poly [1-(3-cyano-2-oxo-2H-1-benzopyran-7-yloxycarbonyl)-1-methylethylen];
Poly [1-(3-ethoxycarbonyl-2-oxo-2H-1-benzopyran-7-yloxycarbonyl)-1-methyl-ethylen];
Poly [1-methyl-1-(2-oxo-1,2-dihydro-chinolin-7-yloxycarbonyl)-ethylen];
Poly [1-methyl-1-(2-oxo-2H-1-benzopyran-7-ylcarbamoyl)-ethylen];
Poly [1-methyl-1-(4-methyl-2-oxo-2H-1-benzopyran-7-ylcarbamoyl)-ethylen];
Poly [1-(2-oxo-2H-1-benzopyran-7-yloxycarbonyl)-ethylen];
Poly [1-(4-methyl-2-oxo-2H-1-benzopyran-7-yloxycarbonyl)-ethylen];
Poly [1-(4-trifluoromethyl-2-oxo-2H-1-benzopyran-7-yloxycarbonyl)-ethylen];
Poly[1-(4-phenyl-2-oxo-2H-1-benzopyran-7-yloxycarbonyl)-ethylen];
Poly [1-(2-oxo-1,2-dihydro-chinolin-7-yloxycarbonyl)-ethylen];
Poly [1-(2-oxo-2H-1-benzopyran-7-ylcarbamoyl)-ethylen];
Poly [1-(4-methyl-2-oxo-2H-1-benzopyran-7-ylcarbamoyl)-ethylen];
Poly [1-chloro-1-(2-oxo-2H-1-benzopyran-7-yloxycarbonyl)-ethylen];
Poly [1-chloro-1-(4-methyl-2-oxo-2H-1-benzopyran-7-yloxycarbonyl)-ethylen];
Poly [1-chloro-1-(2-oxo-2H-1-benzopyran-7-ylcarbamoyl)-ethylen];
Poly [1-chloro-1-(4-methyl-2-oxo-2H-1-benzopyran-7-ylcarbamoyl)-ethylen].

### Beispiel 2:

### Poly [1-methyl-1-[2-(2-oxo-2H-1-benzopyran-7-yloxy)-ethoxycarbonyl]-ethylen]

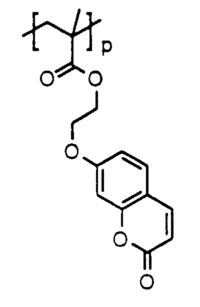

4 g (14,6 mmol) 2-Methyl-acrylsäure 2-(2-oxo-2H-1-benzopyran-7-yloxy)-ethyl ester und 0,024 g (0,15 mmol) 2,2'-Azo-bis-isobutyronitril (AIBN) wurden in 29 ml N,N-Dimethylformamid (DMF) gelöst. Die Lösung wurde 15 Minuten mit einem schwachen Argonstrom durchspült. Anschliessend wurde das Reaktionsgefäss luftdicht verschlossen und auf 55 °C erhitzt. Nach 5 Stunden wurde das Gefäss geöffnet, die Lösung mit 5 ml DMF verdünnt und unter starkem Rühren bei Raumtemperatur in ca. 1 1 Aceton getropft. Das ausgefallene Polymer wurde abfiltriert und bei 60 °C im Wasserstrahlvakuum getrocknet. Zur weiteren Reinigung wurde das Polymer in 30 ml Dichlormethan gelöst und in Diethylether ausgefällt. Dieser Vorgang wurde solange wiederholt, bis dünnschichtchromatographisch kein Monomer mehr nachweisbar war. Filtrieren und Trocknen bei 60 °C im Vakuum ergaben 2,6 g Poly [1-methyl-1-[2-(2-oxo-2H-1-benzopyran-7-yloxyhethoxycarbonyl]-ethylen] als weisses Pulver mit einer Glastufe von T_{g} = 115 °C (Δcₚ = 0,34 J/gK). λ_{max.} (in CH₂Cl₂) = 317,6 nm (ε = 10780 l/mol cm).

Der als Ausgangsmaterial verwendete 2-Methyl-acrylsäure 2-(2-oxo-2H-1-benzopyran-7-yloxy)-ethyl ester wurde nach folgendem Verfahren hergestellt:

### 2-Methyl-acrylsäure 2-(2-oxo-2H-1-benzopyran-7-yloxy)-ethyl ester

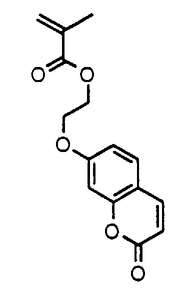

Zu einer Suspension von 8,83 g (67,8 mmol) 2-Hydroxyethyl-methacrylat, 10 g (61,7 mmol) 7-Hydroxy-cumarin und 16,8 g (64 mmol) Triphenylphosphin in 300 ml THF wurden unter Rühren bei Raumtemperatur innerhalb von 30 Minuten 30 ml einer 38 %igen Lösung von Azodicarbonsäure-diäthylester (DEAD) in Toluol in getropft, wobei darauf geachtet wurde, dass die Reaktionstemperatur 25 °C nicht überstieg. Das Reaktionsgemisch wurde anschliessend bei Raumtemperatur noch 3 Stunden gerührt und dann am Rotationsverdampfer auf etwa ein sechstel seines ursprünglichen Volumens eingeengt. Nach Zugabe von ca. 200 ml Diethylether fiel der 2-Methyl-acrylsäure 2-(2-oxo-2H-1-benzopyran-7-yloxy)-ethyl ester analysenrein aus. Ausbeute: 14,7 g weisse Kristalle, λ_{max.} (in CH₂Cl₂) = 320,8 nm (ε = 15060 l/mol cm).

In analoger Weise lassen sich folgende Polymere synthetisieren:
Poly [1-methyl-1-[2-(4-methyl-2-oxo-2H-1-benzopyran-7-yloxy)-ethoxycarbonyl]-ethylen];
Poly [1-methyl-1-[2-(4-trifluoromethyl-2-oxo-2H-1-benzopyran-7-yloxy)-ethoxycarbonyl]-ethylen];
Poly [1-[2-(3,4-dimethyl-2-oxo-2H-1-benzopyran-7-yloxy)-ethoxycarbonyl]-1-methyl-ethylen];
Poly [1-[2-(4,8-dimethyl-2-oxo-2H-1-benzopyran-7-yloxy)-ethoxycarbonyl]-1-methyl-ethylen];
Poly [1-methyl-1-[2-(4-phenyl-2-oxo-2H-1-benzopyran-7-yloxy)-ethoxycarbonyl]-ethylen];
Poly [1-[2-(3-cyano-2-oxo-2H-1-benzopyran-7-yloxy)-ethoxycarbonyl]-1-methyl-ethylen];
Poly [1-[2-(3-ethoxycarbonyl-2-oxo-2H-1-benzopyran-7-yloxy)-ethoxycarbonyl]-1-methyl-ethylen], T_{g} 121°C;
Poly [1-methyl-1-[2-methyl-2-(2-oxo-2H-1-benzopyran-7-yloxy)-ethoxycarbonyl]-ethylen];
Poly [1-methyl-1-[2-methyl-2-(4-methyl-2-oxo-2H-1-benzopyran-7-yloxy)-ethoxycarbonyl]-ethylen];
Poly [1-methyl-1-[3-(2-oxo-2H-1-benzopyran-7-yloxy)-propoxycarbonyl]-ethylen];
Poly [1-methyl-1-[3-(4-methyl-2-oxo-2H-1-benzopyran-7-yloxy)-propoxycarbonyl]-ethylen];
Poly [1-methyl-1-[4-(2-oxo-2H-1-benzopyran-7-yloxy)-butoxycarbonyl]ethylen];
Poly [1-methyl-1-[4-(4-methyl-2-oxo-2H-1-benzopyran-7-yloxy)-butoxycarbonyl]-ethylen];
Poly [1-methyl-1-[2-methyl-2-(2-oxo-2H-1-benzopyran-7-yloxy)-ethylcarbamoyl]-ethylen];
Poly [1-methyl-1-[2-methyl-2-(4-methyl-2-oxo-2H-1-benzopyran-7-yloxy)-ethylcarbamoyl]-ethylen];
Poly [1-methyl-1-[3-(2-oxo-2H-1-benzopyran-7-yloxy)-propylcarbamoyl]-ethylen];
Poly [1-methyl-1-[3-(4-methyl-2-oxo-2H-1-benzopyran-7-yloxy)-propylcarbamoyl]-ethylen];
Poly [1-[2-(2-oxo-2H-1-benzopyran-7-yloxy)-ethoxycarbonyl]-ethylen];
Poly [1-[2-(4-methyl-2-oxo-2H-1-benzopyran-7-yloxy)-ethoxycarbonyl]-ethylen];
Poly [1-[2-(4-trifluoromethyl-2-oxo-2H-1-benzopyran-7-yloxy)-ethoxycarbonyl]-ethylen];
Poly [1-[2-(3,4-dimethyl-2-oxo-2H-1-benzopyran-7-yloxy)-ethoxycarbonyl]-ethylen];
Poly [1-[2-(4,8-dimethyl-2-oxo-2H-1-benzopyran-7-yloxy)-ethoxycarbonyl]-ethylen];
Poly[1-[2-(4-phenyl-2-oxo-2H-1-benzopyran-7-yloxy)-ethoxycarbonyl]-ethylen];
Poly [1-[2-(3-cyano-2-oxo-2H-1-benzopyran-7-yloxy)-ethoxycarbonyl]-ethylen];
Poly [1-[2-methyl-2-(2-oxo-2H-1-benzopyran-7-yloxy)-ethoxycarbonyl]-ethylen];
Poly [1-[2-methyl-2-(4-methyl-2-oxo-2H-1-benzopyran-7-yloxy)-ethoxycarbonyl]-ethylen];
Poly [1-[4-(2-oxo-2H-1-benzopyran-7-yloxy)-butoxycarbonyl]-ethylen];
Poly [1-[4-(4-methyl-2-oxo-2H-1-benzopyran-7-yloxy)-butoxycarbonyl]-ethylen].

### Beispiel 3:

### Poly [1-methyl-1-[2-(2-oxo-2H-1-benzopyran-7-yloxy)-ethoxycarbonyl]-ethylen]

### durch polymeranaloge Veretherung nach Mitsunobu

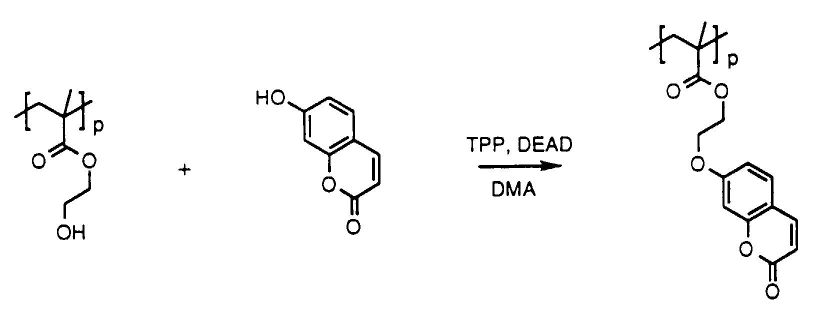

5 g (8,1 mmol) einer Stammlösung von Poly (2-hydroxy-ethyl methacrylat) (21 Gew. % in DMA) wurden mit 15 ml Dimethylacetamid (DMA) verdünnt. Unter Rühren wurden bei Raumtemperatur 2,11 g (8,1 mmol) Triphenylphosphin und 1,31 g (8,1 mmol) 7-Hydroxy-cumarin im Reaktionsansatz gelöst. Die Lösung wurde auf0 °C abgekühlt. Innerhalb von 10 Minuten wurden 1,25 ml (8,1 mmol) Azodicarbonsäure-diäthylester (DEAD) zugetropft. Der Reaktionsansatz wurde noch 15 Minuten bei 0 °C belassen und dann nach Entfernung des Eisbades 15 Stunden bei Raumtemperatur gerührt, bevor erneut eine äquimolare Menge an Triphenylphosphin und 7-Hydroxy-cumarin zugegeben wurde. Anschliessend wurden bei 0 °C nochmals 1,25 ml DEAD innerhalb von 10 Minuten zugetropft. Die Reaktionsmischung wurde weitere 24 Stunden bei Raumtemperatur gerührt und dann unter starkem Rühren in ca. 900 ml Diethylether getropft. Das ausgefallene Polymer wurde abfiltriert und bei 60 °C im Wasserstrahlvakuum getrocknet. Zur Reinigung wurde der Rückstand in 20 ml Dichlormethan gelöst und erneut in Diethylether ausgefällt. Dieser Vorgang wurde solange wiederholt, bis dünnschichtchromatographisch kein Monomer mehr nachweisbar war. Filtrieren und Trocknen bei 60 °C im Vakuum ergaben 1,77 g Poly [1-methyl-1-[2-(2-oxo-2H-1-benzopyran-7-yloxy)-ethoxycarbonyl]-ethylen] als weisses Pulver mit einer Glastufe von T_{g} = 115 °C (Δcₚ = 0,35 J/gK). λ_{max.} (in CH₂Cl₂) = 317,8 nm (ε = 10830 l/mol cm).

In analoger Weise lassen sich folgende Polymere synthetisieren:
Poly [1-[2-(4-methyl-2-oxo-2H-1-benzopyran-6-yloxy)-ethoxycarbonyl]-1-methyl-ethylen-co-1-[2-hydroxy-ethoxycarbonyl]-1-methyl-ethylen], T_{g} =120 °C;
Poly [1-methyl-1-[2-(4-methyl-2-oxo-2H-1-benzopyran-7-yloxy)-ethoxycarbonyl]-ethylen], T_{g} = 131 °C;
Poly[1-[2-(4-ethyl-2-oxo-2H-1-benzopyran-7-yloxy)-ethoxycarbonyl]-1-methyl-ethylen], T_{g} = 113 °C;
Poly [1-methyl-1-[2-(4-n-propyl-2-oxo-2H-1-benzopyran-7-yloxy)-ethoxycarbonyl]-ethylen];
Poly [1-methyl-1-[2-(4-trifluoromethyl-2-oxo-2H-1-benzopyran-7-yloxy)-ethoxycarbonyl]-ethylen], T_{g} = 120°C;
Poly [1-[2-(3,4-dimethyl-2-oxo-2H-1-benzopyran-7-yloxy)-ethoxycarbonyl]-1-methyl-ethylen];
Poly [1-[2-(4,8-dimethyl-2-oxo-2H-1-benzopyran-7-yloxy)-ethoxycarbonyl]-1-methyl-ethylen];
Poly [1-[2-(3-chloro-4-methyl-2-oxo-2H-1-benzopyran-7-yloxy)-ethoxycarbonyl]-1-methyl- ethylen], T_{g} = 142 °C;
Poly [1-methyl-1-[2-(4-methyl-8-nitro-2-oxo-2H-1-benzopyran-7-yloxy)-ethoxycarbonyl]-ethylen], T_{g} = 176 °C;
Poly [1-methyl-1-[2-(3,4,8-trimethyl-2-oxo-2H-1-benzopyran-7-yloxy)-ethoxycarbonyl]-ethylen], T_{g} = 158 °C;
Poly [1-methyl-1-[2-(4-phenyl-2-oxo-2H-1-benzopyran-7-yloxy)-ethoxycarbonyl]-ethylen];
Poly [1-[2-(3-cyano-2-oxo-2H-1-benzopyran-7-yloxy)-ethoxycarbonyl]-1-methyl-ethylen];
Poly [1-methyl-1-[2-methyl-2-(2-oxo-2H- 1-benzopyran-7-yloxy)-ethoxycarbonyl]-ethylen];
Poly [1-methyl-1-[2-methyl-2-(4-methyl-2-oxo-2H-1-benzopyran-7-yloxy)-ethoxycarbonyl]-ethylen];
Poly [1-methyl-1-[2-(2-oxo-2H-1-benzopyran-7-yloxy)-ethoxycarbonyl]-ethylen-co-1-(2-hydroxy-ethoxycarbonyl)-1-methyl-ethylen];
Poly [1-methyl-1-[2-(4-methyl-2-oxo-2H-1-benzopyran-7-yloxy)-ethoxycarbonyl]-ethylen-co-1-(2-hydroxy-ethoxycarbonyl)-1-methyl-ethylen];
Poly [1-methyl-1-[2-(4-n-propyl-2-oxo-2H-1-benzopyran-7-yloxy)-ethoxycarbonyl]-ethylen-co- 1-(2-hydroxy-ethoxycarbonyl)-1-methyl-ethylen] (9:1), T_{g} = 110°C;
Poly [1-methyl-1-[2-(4-trifluoromethyl-2-oxo-2H-1-benzopyran-7-yloxy)-ethoxycarbonyl]-ethylen-co-1-(2-hydroxy-ethoxycarbonyl)-1-methyl-ethylen] (4:1), T_{g} = 120 °C;
Poly [1-[2-(3,4-dimethyl-2-oxo-2H-1-benzopyran-7-yloxy)-ethoxycarbonyl]-1-methyl-ethylen-co-1-(2-hydroxy-ethoxycarbonyl)-1-methyl-ethylen], T_{g} = 146 °C;
Poly [1-[2-(4,8-dimethyl-2-oxo-2H-1-benzopyran-7-yloxy)-ethoxycarbonyl]-1-methyl-ethylen-co-1-(2-hydroxy-ethoxycarbonyl)-1-methyl-ethylen];
Poly [1-methyl-1-[2-(4-phenyl-2-oxo-2H-1-benzopyran-7-yloxy)-ethoxycarbonyl]-ethylen-co-1-(2-hydroxy-ethoxycarbonyl)-1-methyl-ethylen], T_{g} =131°C;
Poly [1-[2-(3-cyano-2-oxo-2H-1-benzopyran-7-yloxy)-ethoxycarbonyl]-1-methyl-ethylen-co-1-(2-hydroxy-ethoxycarbonyl)-1-methyl-ethylen];
Poly [1-methyl-1-[2-(2-oxo- 1,2-dihydro-chinolin-7-yloxy)-ethoxycarbonyl]-ethylen-co-1-(2-hydroxy-ethoxycarbonyl)-1-methyl-ethylen], T_{g} = 185 °C.

### Beispiel 4:

### Poly[1-methyl-1-[4-(2-oxo-2H-1-benzopyran-7-yloxy)-piperidin-1-ylcarbonyl] -ethylen]

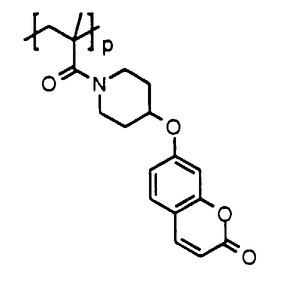

2 g (6,4 mmol) 7-[1-(2-Methyl-acryloyl)-piperidin-4-yloxy]-2-oxo-2H-1-benzopyran und 10,5 mg (0,06 mmol) 2,2'-Azo-bis-isobutyronitril wurden in 13 ml N,N-Dimethylformamid (DMF) gelöst. Die Lösung wurde 15 Minuten mit einem schwachen Argonstrom durchspült. Anschliessend wurde das Reaktionsgefäss luftdicht verschlossen und auf 60 °C erhitzt. Nach 48 Stunden wurde das Gefäss geöffnet, die Lösung mit ca. 10 ml DMF verdünnt und unter starkem Rühren bei Raumtemperatur in 900 ml Methanol getropft. Das ausgefallene Polymer wurde abfiltriert und bei 40 °C im Wasserstrahlvakuum getrocknet. Zur weiteren Reinigung wurde das Polymer in ca. 20 ml DMF gelöst und erneut in 900 ml Methanol gefällt. Dieser Vorgang wurde solange wiederholt, bis dünnschichtchromatographisch kein Monomer mehr nachweisbar war. Filtrieren und Trocknen bei 40 °C im Wasserstrahlvakuum ergaben 1,56 g Poly [1-methyl-1-[4-(2-oxo-2H-1-benzopyran-7-yloxy)-piperidin-1-ylcarbonyl]-ethylen]. λ_{max.} (in CH₂Cl₂) = 319 nm.

Das als Ausgangsmaterial verwendete 7-[1-(2-Methyl-acryloyl)-piperidin-4-yloxy]-2-oxo-2H-1-benzopyran wurde nach folgendem Verfahren hergestellt:

### 1-(4-Hydroxy-piperidin-1-yl)-2-methyl-prop-2-en-1-on

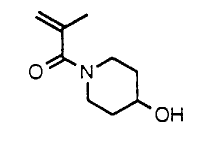

11 g (109 mmol) 4-Hydroxy-piperidin und 14,5 ml Triethylamin wurden in einer Mischung aus 30 ml THF und 80 ml Dichlormethan gelöst und auf0 °C abgekühlt. Innerhalb von 15 Minuten wurden 10 ml (104 mmol) Methacrylsäurechlorid zugetropft. Die Lösung wurde 5 Stunden bei 10 °C gerührt. Anschliessend wurde das Reaktionsgemisch über Kieselgel filtriert. Nach Abdestillieren des Lösungsmittels wurde das Rohprodukt säulenchromatographisch an Kieselgel mit Essigester als Laufmittel gereinigt. Daraus resultierten 14,5 g 1-(4-Hydroxy-piperidin-1-yl)-2-methyl-prop-2-en-1-on in Form weisser Kristalle.
IR (KBr): 1605 cm⁻¹ (breit, C=O), 1078 cm⁻¹ (CH-OH), 909 cm⁻¹ (C=CH₂).

### 7-[1-(2-Methyl-acryloyl)-piperidin-4-yloxy]-2-oxo-2H-1-benzopyran

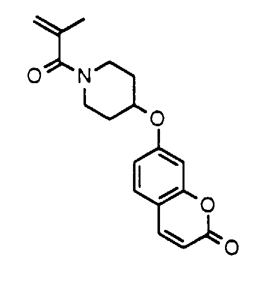

Zu einer Suspension von 7,1 g (42 mmol) 1-(4-Hydroxy-piperidin-1-yl)-2-methyl-prop-2-en-1-on, 6,8 g (42 mmol) 7-Hydroxy-cumarin und 11 g (42 mmol) Triphenylphosphin in 250 ml THF wurden unter Rühren bei Raumtemperatur innerhalb von 15 Minuten 19 ml einer 38 %igen Lösung von Azodicarbonsäure-diäthylester (DEAD) in Toluol in getropft. Das Reaktionsgemisch wurde 24 Stunden bei Raumtemperatur gerührt und dann am Rotationsverdampfer eingeengt, in Diethylether aufgenommen und filtriert. Das Filtrat wurde vollständig eingedampft und der Rückstand zweimal an Kieselgel chromatographiert Schliesslich wurde das Produkt noch einmal aus Cyclohexan umkristallisiert. Es verblieben 3 g 7-[1-(2-Methyl-acryloyl)-piperidin-4-yloxy]-2-oxo-2H-1-benzopyran als weisse Kristalle. λ_{max.} (in CH₂Cl₂) = 322 nm (ε = 16390 l/mol cm).

In analoger Weise lassen sich folgende Polymere synthetisieren:
Poly [1-methyl-1-[4-(4-methyl-2-oxo-2H-1-benzopyran-7-yloxy)-piperidin-1-ylcarbonyl]-ethylen];
Poly [1-methyl-1-[4-(4-n-proyl-2-oxo-2H-1-benzopyran-7-yloxy)-piperidin-1-ylcarbonyl]-ethylen];
Poly [1-methyl-1-[4-(4-trifluoromethyl-2-oxo-2H-1-benzopyran-7-yloxy)-piperidin-1-ylcarbonyl]-ethylen];
Poly [1-[4-(3,4-dimethyl-2-oxo-2H-1-benzopyran-7-yloxy)-piperidin-1-ylcarbonyl]-1-methyl-ethylen];
Poly [1-[4-(4,8-dimethyl-2-oxo-2H-1-benzopyran-7-yloxy)-piperidin-1-ylcarbonyl]-1-methyl-ethylen];
Poly [1-methyl-1-[4-(4-phenyl-2-oxo-2H-1-benzopyran-7-yloxy)-piperidin 1-ylcarbonyl]-ethylen];
Poly [1-[4-(3-cyano-2-oxo-2H-1-benzopyran-7-yloxy)-piperidin-1-yl-carbonyl]- 1-methyl-ethylen];
Poly[1-[4-(2-oxo-2H-1-benzopyran-7-yloxy)-piperidin-1-ylcarbonyl]-ethylen];
Poly [1-[4-(4-methyl-2-oxo-2H-1-benzopyran-7-yloxy)-piperidin-1-yl-carbonyl]-ethylen];
Poly [1-chloro-1-[4-(2-oxo-2H-1-benzopyran-7-yloxy)-piperidin-1-yl-carbonyl]-ethylen];
Poly [1-chloro-1-[4-(4-methyl-2-oxo-2H-1-benzopyran-7-yloxy)-piperidin-1-ylcarbonyl]-ethylen].

### Beispiel 5:

### Poly [1-methyl-1-[6-[4-(2-oxo-2H-1-benzopyran-7-yloxycarbonyl)-phenoxy]-hexyloxycarbonyl]-ethylen]

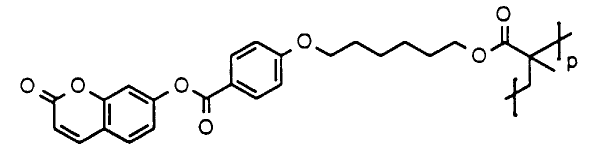

1 g (2,22 mmol) 4-[6-(2-Methyl-acryloyloxy)-hexyloxy]-benzoesäure 2-oxo-2H-1-benzopyran-7-yl ester und 1,85 mg (0,011 mmol) 2,2'-Azo-bis-isobutyronitril wurden in 4,5 ml N,N-Dimethylformamid (DMF) gelöst. Die Lösung wurde 15 Minuten mit einem schwachen Argonstrom durchspült. Anschliessend wurde das Reaktionsgefäss luftdicht verschlossen und auf 60 °C erhitzt. Nach 24 Stunden wurde das Gefäss geöffnet, die Lösung mit 8 ml DMF verdünnt und unter starkem Rühren bei Raumtemperatur in 300 ml Methanol getropft. Das ausgefallene Polymer wurde abfiltriert und bei 40 °C im Wasserstrahlvakuum getrocknet. Zur weiteren Reinigung wurde das Polymer in ca. 10 ml DMF gelöst und erneut in 200 ml Methanol gefällt. Dieser Vorgang wurde solange wiederholt, bis dünnschichtchromatographisch kein Monomer mehr nachweisbar war. Filtrieren und Trocknen bei 40 °C im Wasserstrahlvakuum ergaben 0,82 g Poly [1-methyl-1-[6-[4-(2-oxo-2H-1-benzopyran-7-yloxycarbonyl)-phenoxy]-hexyloxycarbonyl]-ethylen]. Phasenfolge (°C): G 68 LC 90 I; λ_{max.} (in CH₂Cl₂) = 307,8 nm (ε = 11150 l/mol cm) und 275,8 nm (ε = 23190 l/mol cm).

Der als Ausgangsmaterial verwendete 4-[6-(2-Methyl-acryloyloxy)-hexyloxy]-benzoesäure 2-oxo-2H-1-benzopyran-7-yl ester wurde nach folgendem Verfahren hergestellt:

### 4-(6-Hydroxy-hexyloxy)-benzoesäure

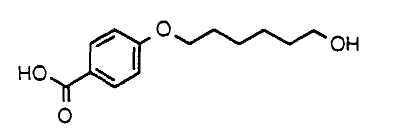

229,2 g (1,66 mol) p-Hydroxy-benzoesäure wurden in 600 ml Methanol gelöst und bei 60 °C innerhalb von 10 Minuten mit einer Lösung aus 151 g (3,77 mol) NaOH in 480 ml H20 versetzt. Zu dieser Lösung wurden 271,2 g (1,99 mol) 6-Chlor-hexanol langsam zugetropft. Schliesslich wurden noch 0,75 g Kaliumiodid zugegeben und der Ansatz 60 Stunden unter Rückfluss gekocht. Zur Aufarbeitung wurde die gelbe Lösung in 3 l H₂O gegossen und mit 10 %iger HCl (ca. 600 ml) versetzt bis ein pH-Wert von 1 erreicht war. Die milchige Suspension wurde über eine grosse Nutsche filtriert. Der Rückstand wurde trockengesaugt und zweimal aus ca. 1,5 l Ethanol umkristallisiert. Dies ergab 229,6 g 4-(6-Hydroxy-hexyloxy)-benzoesäure als feines weisses Pulver; Smp. 136-141 °C.

### 4-[6-(2-Methyl-acryloyloxy)-hesyloxy]-benzoesäure

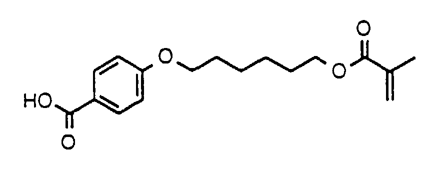

71,5 g (0,3 mol) 4-(6-Hydroxy-hexyloxy)-benzoesäure und 101,5 g (1,18 mol) Methacrylsäure wurden in 950 ml Chloroform gelöst. Nach Zugabe von 7,2 g (0,07 mol) Hydrochinon und 7,2 g (0,04 mol) p-Toluolsulfonsäure wurde der Ansatz 48 Stunden unter Rückfluss am Wasserabscheider gekocht. Die klare braune Lösung wurde anschliessend eingedampft, der Rückstand in 1,5 l Diethylether aufgenommen, filtriert und fünfmal mit je 300 ml H₂O geschüttelt. Die organische Phase wurde über Na₂SO₄ getrocknet, eingedampft und der Rückstand zweimal aus Methanol umkristallisiert. Nach Trocknung im Wasserstrahlvakuum bei 40 °C verblieben 47,33 g 4-[6-(2-Methyl-acryloyloxy)-hexyloxy]-benzoesäure als weisses Pulver; Smp. 83 °C.

### 4-[6- (2-Methyl-acryloyloxy)-hexyloxy]-benzoesäure 2-oxo-2H-1-benzopyran-7-yl ester

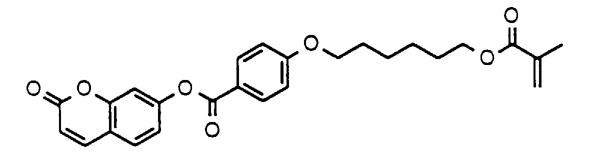

8,5 g (0,028 mol) 4-[6-(2-Methyl-acryloyloxy)-hexyloxy]-benzoesäure wurden mit 10 ml Thionylchlorid und 3 Tropfen DMF versetzt und 4 Stunden unter Rückfluss gekocht. Das überschüssige Thionylchlorid wurde zunächst im Wasserstrahl- und anschliessend im Hochvakuum vollständig entfernt. Das verbliebene Säurechlorid wurde in 20 ml THF aufgenommen und bei 0 °C langsam zu einer Suspension aus 4,09 g (0,025 mol) 7-Hydroxy-cumarin und 4,25 ml Triethylamin in 30 ml THF getropft. Der Ansatz wurde über Nacht bei Raumtemperatur gerührt, filtriert und das Filtrat bis zur Trockne eingedampft. Der Rückstand wurde durch Säulenchromatographie und anschliessend durch Umkristallisation aus Ethanol gereinigt. Es wurden 6,71 g 4-[6-(2-Methylacryloyloxy)-hexyloxy]-benzoesäure 2-oxo-2H-1-benzopyran-7-yl ester als weisses Pulver isoliert; Smp. 98-104,5 °C.

In analoger Weise lassen sich folgende Polymere synthetisieren:
Poly [1-methyl-1-[2-[4-(2-oxo-2H-1-benzopyran-7-yloxycarbonyl)-phenoxy]-ethoxycarbonyl]-ethylen];
Poly [1-methyl-1-[3-[4-(2-oxo-2H- 1-benzopyran-7-yloxycarbonyl)-phenoxy]-propoxycarbonyl]-ethylen];
Poly [1-methyl-1-[4-[4-(2-oxo-2H-1-benzopyran-7-yloxycarbonyl)-phenoxy]-butoxycarbonyl]-ethylen];
Poly [1-methyl-1-[5-[4-(2-oxo-2H- 1-benzopyran-7-yloxycarbonyl)-phenoxy]-pentyloxycarbonyl]-ethylen];
Poly [1-[2-[4-(2-oxo-2H-1-benzopyran-7-yloxycarbonyl)-phenoxy]-ethoxycarbonyl]-ethylen];
Poly [1-[3-[4-(2-oxo-2H-1-benzopyran-7-yloxycarbonyl)-phenoxy]-propoxycarbonyl]-ethylen];
Poly [1-[4-[4-(2-oxo-2H-1-benzopyran-7-yloxycarbonyl)-phenoxy]-butoxycarbonyl]-ethylen];
Poly [1-[5-[4-(2-oxo-2H-1-benzopyran-7-yloxycarbonyl)-phenoxy]-pentyloxycarbonyl]-ethylen];
Poly [1-[6-[4-(2-oxo-2H-1-benzopyran-7-yloxycarbonyl)-phenoxy]-hexyloxycarbonyl]-ethylen];
Poly [1-methyl-1-[6-[4-(4-methyl-2-oxo-2H-1-benzopyran-7-yloxycarbonyl)-phenoxy]-hexyloxycarbonyl]-ethylen];
Poly [1-methyl-1-[6-[4-(4-trifluoromethyl-2-oxo-2H-1-benzopyran-7-yloxycarbonyl)-phenoxy]-hexyloxycarbonyl]-ethylen];
Poly [1-methyl- 1-[6-[4-(3-cyano-2-oxo-2H-1-benzopyran-7-yloxycarbonyl)-phenoxy]-hexyloxycarbonyl]-ethylen].

### Beispiel 6:

### Poly [oxy-methyl-[4-[4-(2-oxo-2H-1-benzopyran-7-yloxycarbonyl)-phenoxy]-butyl]-silylen]

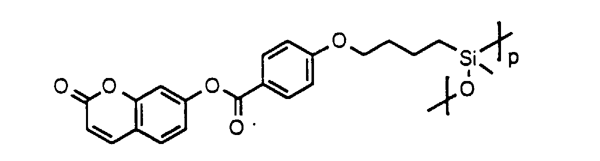

0,852 g (2,5 mmol) 4-(But-3-enyloxy)-benzoesäure 2-oxo-2H-1-benzopyran-7-yl-ester und 0,127 g Poly(methyl-hydrogen-siloxan) wurden in 15 ml Dichlormethan gelöst. Die Lösung wurde über ein Septum auf dem Reaktionsgefäss 10 Minuten lang mit einem schwachen Stickstoffstrom durchspült. Anschliessend wurden bei Raumtemperatur unter Rühren 8 µl einer Platindivinyltetramethyldisiloxankomplex Lösung in das Reaktionsgemisch eingespritzt. Der Ansatz wurde eine Woche bei Raumtemperatur gerührt. Anschliessend wurde das Reaktionsgemisch unter Rühren in 400 ml eisgekühltes Methanol getropft. Das ausgefallene Polymer wurde abgetrennt, getrocknet, in ca. 10 ml Dichlormethan gelöst und in 300 ml Diethylether ausgefällt. Dieser Vorgang wurde noch zweimal wiederholt. Nach Trocknen im Hochvakuum ergab dies 0,15 g Poly [oxy-methyl-[4-[4-(2-oxo-2H-1-benzopyran-7-yloxycarbonyl)-phenoxy]-butyl]-silylen] mit einer Glasstufe T_{g} = 54 °C, Δcₚ = 0,19 J/gK.

Der als Ausgangsmaterial verwendete 4-(But-3-enyloxy)-benzoesäure 2-oxo-2H-1-benzopyran-7-yl-ester wurde nach folgendem Verfahren hergestellt:

### 4-(But-3-enyloxy)-benzoesäure

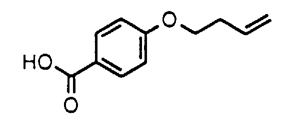

69,1 g (0,5 mol) p-Hydroxybenzoesäure wurden in 400 ml Ethanol gelöst und mit einer Lösung aus 56,1 g (1 mol) KOH in 250 ml Wasser versetzt. Der Reaktionsansatz wurde unter Rückfluss erhitzt. Dabei wurden 74,26 g (0,55 mol) 4-Brom-1-buten langsam zugetropft. Nach 5 Stunden wurde das Ethanol am Rotationsverdampfer entfernt. Die Wasserphase wurde mit NaOH auf einen pH-Wert von 10 gebracht und mehrfach mit Diethylether extrahiert. Die wässrige Phase wurde auf eine Mischung aus 46 ml konzentrierter HCl und 500 ml Eiswasser geschüttet. Die ausgefallene Säure wurde abfiltriert, mit wenig Wasser gewaschen und aus Methanol/Wasser (Mischverhältnis 2/1) umkristallisiert. Nach dem Trocknen im Wasserstrahlvakuum bei 60 °C verblieben 40 g 4-(But-3-enyloxy)-benzoesäure als weisses Pulver; Smp. (C-N) 120 °C, Klp. (N-I) 141 °C.

### 4-(But-3-enyloxy)-benzoesäure 2-oxo-2H-1-benzopyran-7-yl-ester

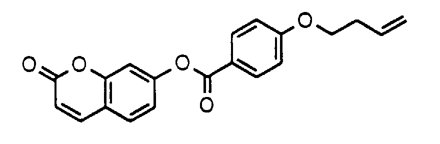

4,85 g (0,025 mol) 4-(But-3-enyloxy)-benzoesäure wurden mit 9 ml Thionylchlorid und 2 Tropfen DMF versetzt und 2 Stunden unter Rückfluss gekocht. Das überschüssige Thionylchlorid wurde zunächst im Wasserstrahl- und anschliessend im Hochvakuum vollständig entfernt. Das verbliebene Säurechlorid wurde in 10 ml Dichlormethan aufgenommen und bei 0 °C langsam zu einer Suspension aus 3,9 g (0,024 mol) 7-Hydroxy-cumarin und 3,9 ml Triethylamin in 5 ml Dichlormethan getropft. Der Ansatz wurde über Nacht bei Raumtemperatur gerührt, filtriert und das Filtrat eingedampft. Zur Reinigung wurde der Rückstand mit Dichlormethan an Kieselgel chromatographiert und anschliessend aus Ethanol umkristallisiert. Es wurden 5,2 g 4-(But-3-enyloxy)-benzoesäure 2-oxo-2H-1-benzopyran-7-yl-ester in Form feiner weisser Nadeln isoliert; Smp. 108-109 °C.

In analoger Weise lassen sich folgende Polymere synthetisieren:
Poly [oxy-methyl-[4-[4-(4-methyl-2-oxo-2H-1-benzopyran-7-yloxycarbonyl)-phenoxy] -butyl]-silylen];
Poly [oxy-methyl-[4-[4-(4-trifluoromethyl-2-oxo-2H-1-benzopyran-7-yloxycarbonyl)-phenoxy]-butyl]-silylen];
Poly [oxy-methyl-[4-[4-(3,4-dimethyl-2-oxo-2H-1-benzopyran-7-yloxycarbonyl)-phenoxy]-butyl]-silylen];
Poly [oxy-methyl-[4-[4-(4,8-dimethyl-2-oxo-2H-1-benzopyran-7-yloxycarbonyl)-phenoxy]-butyl]-silylen];
Poly [oxy-methyl-[3-[4-(2-oxo-2H-1-benzopyran-7-yloxycarbonyl)-phenoxy]-propyl]-silylen];
Poly [oxy-methyl-[5-[4-(2-oxo-2H-1-benzopyran-7-yloxycarbonyl)-phenoxy]-pentyl]-silylen];
Poly [oxy-methyl-[6-[4-(2-oxo-2H-1-benzopyran-7-yloxycarbonyl)-phenoxy]-hexyl]-silylen];
Poly [oxy-methyl-[4-[4-(2-oxo-2H-1-benzopyran-7-yloxycarbonyl)-phenoxy]-butyl]-silylen-co-oxy-dimethyl-silylen];
Poly [oxy-methyl-[6-[4-(2-oxo-2H-1-benzopyran-7-yloxycarbonyl)-phenoxy] hexyl]-silylen-co-oxy-dimethyl-silylen].

### Beispiel 7:

### Poly [1-methosycarbonyl-1-methyl-ethylen-co-1-methyl-1-(2-oxo-2H-1-benzopyran-7-yloxycarbonyl)-ethylen] (1:12)

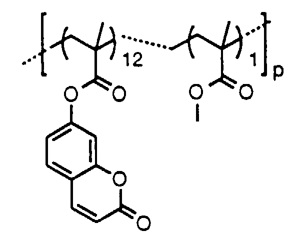

2 g (8,7 mmol) 2-Methyl-acrylsäure 2-oxo-2H-1-benzopyran-7-yl ester, 0,15 g (1,5 mmol) 2-Methyl-acrylsäure und 16,8 mg (0,102 mmol) 2,2'-Azo-bis-isobutyronitril wurden in 20 ml N,N-Dimethylformamid (DMF) gelöst. Die Lösung wurde 30 Minuten mit einem schwachen Argonstrom durchspült. Anschliessend wurde das Reaktionsgefäss luftdicht verschlossen und auf 55 °C erhitzt. Nach 6 Stunden wurde das Gefäss geöffnet und die Lösung unter starkem Rühren bei Raumtemperatur in 800 ml Diethylether getropft. Das ausgefallene Polymer wurde abfiltriert und bei 70 °C im Wasserstrahlvakuum getrocknet. Zur weiteren Reinigung wurde das Polymer in 20 ml Dichlormethan gelöst und erneut in 800 ml Diethylether gefällt. Dieser Vorgang wurde solange wiederholt, bis dünnschichtchromatographisch kein Monomer mehr nachweisbar war. Filtrieren und Trocknen bei 60 °C im Wasserstrahlvakuum ergaben 1,27 g Poly [1-methoxycarbonyl-1-methyl-ethylen-co-1-methyl-1-(2-oxo-2H-1-benzopyran-7-yloxycarbonyl)-ethylen] (1:12). Das Polymer besitzt eine Glasstufe bei Tg = 182 °C. λ_{max.} (7,51 mg/l in CH₂Cl₂) = 308 nm (log Iₒ/I = 0,259) und 275,6 nm (log Iₒ/I = 0,327).

Die Darstellung des 2-Methyl-acrylsäure 2-oxo-2H-1-benzopyran-7-yl esters ist in Beispiel 1 beschrieben.

In analoger Weise lassen sich folgende Polymere synthetisieren:
Poly [1-(2-hydroxy-ethoxycarbonyl)-1-methyl-ethylen-co-1-methyl-1-(2-oxo-2H-1-benzopyran-7-yloxycarbonyl)-ethylen] (1:9), T_{g} = 181 °C;
Poly [1-(2-hydroxy-ethoxycarbonyl)-ethylen-co-1-methyl-1-(2-oxo-2H-1-benzopyran-7-yloxycarbonyl)-ethylen];
Poly [1-cyano-1-methyl-ethylen-co-1-methyl-1-(2-oxo-2H-1-benzopyran-7-yloxycarbonyl)-ethylen];
Poly [1-cyano-ethylen-co-1-methyl-1-(2-oxo-2H-1-benzopyran-7-yloxycarbonyl)-ethylen];
Poly [1-methoxycarbonyl-ethylen-co-1-methyl-1-(2-oxo-2H-1-benzopyran-7-yloxycarbonyl )-ethylen];
Poly [1-methoxycarbonyl-1-methyl-ethylen-co-1-(2-oxo-2H-1-benzopyran-7-yloxycarbonyl)-ethylen];
Poly [1-methyl-1-(2-oxo-2H-1-benzopyran-7-yloxycarbonyl)-ethylen-co-1-phenyl-ethylen];
Poly [1-methoxycarbonyl-1-methyl-ethylen-co-1-methyl-1-[2-(2-oxo-2H-1-benzopyran-7-yloxy)-ethoxycarbonyl]-ethylen];
Poly [1-methoxycarbonyl-1-methyl-ethylen-co-1-methyl-1-[4-(2-oxo-2H-1-benzopyran-7-yloxy)-butoxycarbonyl]-ethylen];
Poly [1-methoxycarbonyl-1-methyl-ethylen-co-1-methyl-1-[6-(2-oxo-2H-1-benzopyran-7-yloxy)-hexyloxycarbonyl]-ethylen];
Poly [1-methoxycarbonyl-1-methyl-ethylen-co-1-methyl-1-(4-methyl-2-oxo-2H-1-benzopyran-7-yloxycarbonyl)-ethylen];
Poly [1-cyano-1-methyl-ethylen-co-1-methyl-1-(4-methyl-2-oxo-2H-1-benzopyran-7-yloxycarbonyl)-ethylen];
Poly [1-methoxycarbonyl-1-methyl-ethylen-co-1-methyl-1-[2-(4-methyl-2-oxo-2H-1-benzopyran-7-yloxy)-ethoxycarbonyl]-ethylen];
Poly [1-cyano-1-methyl-ethylen-co-1-methyl-1-[2-(4-methyl-2-oxo-2H-1-benzopyran-7-yloxy)-ethoxycarbonyl]-ethylen];
Poly [1-cyano-ethylen-co-1-methyl-1-[2-(4-phenyl-2-oxo-2H-1-benzopyran-7-yloxy)-ethoxycarbonyl]-ethylen];
Poly [1-methyl-1-[2-(4-methyl-2-oxo-2H-1-benzopyran-7-yloxy)-ethoxy-carbonyl]-ethylen-co-1-phenyl-ethylen];
Poly [1-methoxyearbonyl-1-methyl-ethylen-co-1-methyl-1-[2-[4-(2-oxo-2H-1-benzopyran-7-yloxycarbonyl)-phenoxy]-ethoxycarbonyl]-ethylen];
Poly [1-methoxycarbonyl-1-methyl-ethylen-co-1-methyl-1-[6-[4-(2-oxo-2H-1-benzopyran-7-yloxycarbonyl)-phenoxy]-hexyloxycarbonyl]-ethylen];
Poly [1-methoxycarbonyl-1-methyl-ethylen-co-1-methyl-1-[6-[4-(3-cyano-2-oxo-2H-1-benzopyran-7-yloxycarbonyl)-phenoxy]-hexyloxycarbonyl]-ethylen];
Poly [1-cyano-1-methyl-ethylen-co-1-methyl-1-[6-[4-(2-oxo-2H-1-benzopyran-7-yloxycarbonyl)-phenoxy]-hexyloxycarbonyl]-ethylen];
Poly [1-cyano-ethylen-co-1-methyl-1-[6-[4-(2-oxo-2H-1-benzopyran-7-yloxycarbonyl)-phenoxy]-hexyloxycarbonyl]-ethylen];
Poly [1-methyl-1-[6-[4-(2-oxo-2H-1-benzopyran-7-yloxycarbonyl)-phenoxy]-hexyloxycarbonyl]-ethylen-co-1-phenyl-ethylen];
Poly [1-methoxycarbonyl-1-methyl-ethylen-co-1-methyl-1-[4-(2-oxo-2H-1-benzopyran-7-yloxy)-piperidin-1-ylcarbonyl]-ethylen];
Poly [1-cyano-ethylen-co-1-methyl-1-[4-(2-oxo-2H- 1-benzopyran-7-yloxy)-piperidin-1-ylcarbonyl]-ethylen];
Poly [1-methyl-1-[4-(2-oxo-2H-1-benzopyran-7-yloxy)-piperidin-1-yl-carbonyl]-ethylen-co-1-phenyl-ethylen].

### Beispiel 8:

### Poly [1-[6-[4-(4-methoxy-phenoxycarbonyl)-phenoxy]-hexyloxycarbonyl]-1-methyl-ethylen-co-1-methyl-1-[6-[4-(2-oxo-2H-1-benzopyran-7-yloxycarbonyl)-phenoxy]--hexyloxycarbonyl]-ethylen] (1:1)

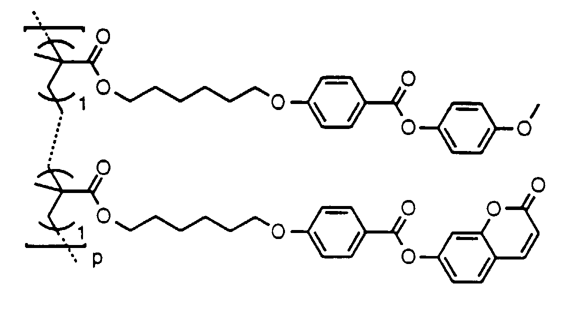

0,5 g (1,11 mmol) 4-[6-(2-Methyl-acryloyloxy)-hexyloxy]-benzoesäure 2-oxo-2H-1-benzopyran-7-yl ester, 0,46 g (1,11 mmol) 4-[6-(2-Methyl-acryloyloxy)-hexyloxy]-benzoesäure 4-methoxy-phenyl ester und 3,62 mg (0,022 mmol) 2,2'-Azo-bis-isobutyronitril wurden in 4,5 ml N,N-Dimethylformamid (DMF) gelöst. Die Lösung wurde 30 Minuten mit einem schwachen Argonstrom durchspült. Anschliessend wurde das Reaktionsgefäss luftdicht verschlossen und auf 55 °C erhitzt. Nach 20 Stunden wurde das Gefäss geöffnet, die Lösung mit 4 ml DMF verdünnt und unter starkem Rühren bei Raumtemperatur in 450 ml Methanol getropft. Das ausgefallene Polymer wurde abfiltriert und bei 40 °C im Wasserstrahlvakuum getrocknet. Zur weiteren Reinigung wurde das Polymer in ca. 20 ml Dichlormethan gelöst und erneut in 700 ml Methanol gefällt. Dieser Vorgang wurde solange wiederholt, bis dünnschichtchromatographisch kein Monomer mehr nachweisbar war. Filtrieren und Trocknen bei 40°C im Wasserstrahlvakuum ergaben 0,85 g Poly [1-[6-[4-(4-methoxy-phenyloxycarbonyl)-phenoxy]-hexyloxycarbonyl]-1-methyl-ethylen-co-1-methyl-1-[6-[4-(2-oxo-2H-1-benzopyran-7-yloxycarbonyl)-phenoxy]-hexyloxycarbonyl]-ethylen] (1:1). Phasenfolge (°C): G 56 LC 96 I, λ_{max.} (14,95 mg/l in CH₂Cl₂) = 308 nm (log Iₒ/I = 0,213) und 267,4 nm (log Iₒ/I = 0,754).

Die Darstellung des 4-[6-(2-Methyl-acryloyloxy)-hexyloxy]-benzoesäure 2-oxo-2H-1-benzopyran-7-yl esters ist in Beispiel 5 beschrieben.

Der 4-[6-(2-Methyl-acryloyloxy)-hexyloxy]-benzoesäure 4-methoxy-phenyl ester wurde ausgehend von 4-[6-(2-Methyl-acryloyloxy)-hexyloxy]-benzoesäure (Beipiel 5) und 4-Methoxy-phenol nach folgendem Verfahren hergestellt:

### 4-[6-(2-Methyl-acryloyloxy)-hexyloxy]-benzoesäure 4-methoxy-phenyl ester

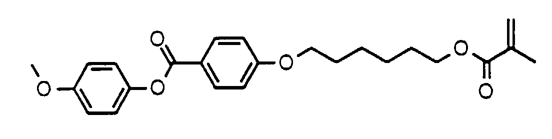

Zu einer Lösung von 7,8 g (25,4 mmol) 4-[6-(2-Methyl-acryloyloxy)-hexyloxy]-benzoesäure, 2,9 g (23,4 mmol) 4-Methoxy-phenol und 0,5 g 4-(Dimethylamino)-pyridin in 200 ml Dichlormethan wurde unter Rühren bei 0 °C innerhalb von 15 Minuten 6,8 g (33 mmol) N,N'-Dicyclohexylcarbodiimid gegeben. Das Reaktionsgemisch wurde 16 Stunden bei Raumtemperatur weitergerührt, dann filtriert und das Filtrat zweimal mit gesättigter K₂CO₃-Lösung extrahiert. Die vereinigten organischen Phasen wurden zweimal mit gesättigter Kochsalz-Lösung gewaschen, über Magnesiumsulfat getrocknet, filtriert und anschliessend eingeengt. Chromatographische Reinigung des Rückstandes an Kieselgel mit Methylenchlorid : Aceton = 19:1 und zweimaliges Umkristallisieren der gemäss Dünnschichtchromatographie reinen Fraktionen aus Methylalkohol ergab 7,76 g 4-[6-(2-Methyl-acryloyloxy)-hexyloxy]-benzoesäure 4-methoxyphenyl ester als weissen Feststoff. Die Substanz ist monotrop nematisch, Smp. (C-I) 55 °C, (Klp. (N-I) 35,7 °C). Die massenspektrometrische Analyse liefert den Molpeak bei m/e = 412.

In analoger Weise lassen sich folgende Polymere synthetisieren:
Poly [1-[6-[4-(4-methoxy-phenoxycarbonyl)-phenoxy]-hexyloxycarbonyl]-1-methyl-ethylen-co-1-methyl-1-[6-[4-(4-methyl-2-oxo-2H-1-benzopyran-7-yloxycarbonyl)-phenoxy]-hexyloxycarbonyl]-ethylen];
Poly [1-[6-[4-(4-methoxy-phenoxycarbonyl)-phenoxy]-hexyloxycarbonyl]-1-methyl-ethylen-co-1-[6-[4-(3-cyano-2-oxo-2H-1-benzopyran-7-yloxycarbonyl)-phenoxy]-hexyloxycarbonyl]-1-methyl-ethylen];
Poly [1-[6-[4-(4-methoxy-phenoxycarbonyl)-phenoxy]-hexyloxycarbonyl]-1-methyl-ethylen-co-1-methyl-1-[6-[4-(4-trifluoromethyl-2-oxo-2H-1-benzopyran-7-yloxycarbonyl)-phenoxy]-hexyloxycarbonyl]-ethylen];
Poly [1-[4-[4-(4-methoxy-phenoxycarbonyl)-phenoxy]-butoxycarbonyl]-1-methyl-ethylen-co-1-[6-[4-(3-cyano-2-oxo-2H-1-benzopyran-7-yloxycarbonyl)-phenoxy]-hexyloxycarbonyl]-1-methyl-ethylen];
Poly [1-[6-[4-(4-ethoxy-phenoxycarbonyl)-phenoxy]-hexyloxycarbonyl]-1-methyl-ethylen-co-1-methyl-1-[6-[4-(2-oxo-2H-1-benzopyran-7-yloxycarbonyl)-phenoxy]-hexyloxycarbonyl]-ethylen];
Poly [1-[6-[4-(4-cyano-phenoxycarbonyl)-phenoxy]-hexyloxycarbonyl]-1-methyl-ethylen-co-1-methyl-1-[6-[4-(2-oxo-2H-1-benzopyran-7-yloxycarbonyl)-phenoxy]-hexyloxycarbonyl]-ethylen];
Poly [1-[6-[4-(4-cyano-phenoxycarbonyl)-phenoxy]-hexyloxycarbonyl]-1-methyl-ethylen-co-1-[6-[4-(3-cyano-2-oxo-2H-1-benzopyran-7-yloxycarbonyl)-phenoxy]-hexyloxycarbonyl]- 1-methyl-ethylen];
Poly [1-[6-[4-(4-fluoro-phenoxycarbonyl)-phenoxy]-hexyloxycarbonyl]-1-methyl-ethylen-co-1-methyl-1-[6-[4-(2-oxo-2H-1-benzopyran-7-yloxycarbonyl)-phenoxy]-hexyloxycarbonyl]-ethylen];
Poly [1-[6-[4-(4-cyano-3-fluoro-phenoxycarbonyl)-phenoxy]-hexyloxycarbonyl]-1-methyl-ethylen-co-1-methyl-1-[6-[4-(2-oxo-2H-1-benzopyran-7-yloxycarbonyl)-phenoxy]-hexyloxycarbonyl]-ethylen];
Poly [1-methyl-1-[6-[4-(4-nitro-phenoxycarbonyl)-phenoxy]-hexyloxycarbonyl]-ethylen-co-1-methyl-1-[6-[4-(2-oxo-2H-1-benzopyran-7-yloxycarbonyl)-phenoxy]-hexyloxycarbonyl]-ethylen];
Poly [1-methyl-1-[6-[4-(4-methyl-phenoxycarbonyl)-phenoxy]-hexyloxycarbonyl]-ethylen-co-1-methyl-1-[6-[4-(2-oxo-2H-1-benzopyran-7-yloxycarbonyl)-phenoxy]-hexyloxycarbonyl]-ethylen];
Poly [1-methyl-1-[6-[4-(4-trifluoromethyl-phenoxycarbonyl)-phenoxy]-hexyloxycarbonyl]-ethylen-co-1-methyl-1-[6-[4-(2-oxo-2H-1-benzopyran-7-yl-oxycarbonyl)-phenoxy]-hexyloxycarbonyl]-ethylen].

### Beispiel 9:

### Poly [1-methyl-1-[6-(2-oxo-2H-1-benzopyran-7-yloxy)-hexyloxycarbonyl]-ethylen]

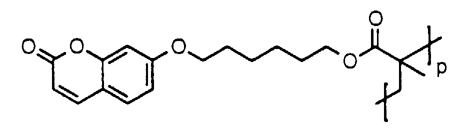

2,03 g (6,14 mmol) 2-Methyl-acrylsäure 6-(2-oxo-2H-1-benzopyran-7-yloxy)-hexyl ester und 0,01 g (0,061 mmol) 2,2'-Azo-bis-isobutyronitril (AIBN) wurden in 12 ml N,N-Dimethylformamid (DMF) gelöst. Die Lösung wurde 30 Minuten mit einem schwachen Argonstrom durchspült. Anschliessend wurde das Reaktionsgefäss luftdicht verschlossen und auf 55 °C erhitzt. Nach 20 Stunden wurde das Gefäss geöffnet und unter starkem Rühren bei Raumtemperatur in 1 l tiefgekühlten Diethylether getropft. Das ausgefallene Polymer wurde abfiltriert und bei 50 °C im Wasserstrahlvakuum getrocknet. Zur weiteren Reinigung wurde das Polymer in ca. 20 ml Chloroform gelöst und in 1,5 l Diethylether ausgefällt. Dieser Vorgang wurde solange wiederholt, bis dünnschichtchromatographisch kein Monomer mehr nachweisbar war. Filtrieren und Trocknen bei 50 °C im Vakuum ergaben 1,61 g Poly [1-methyl-1-[6-(2-oxo-2H-1-benzopyran-7-yloxy)-hexyloxycarbonyl]-ethylen] als weisses Pulver mit einer Glastufe von T_{g} = 40 °C (Δcₚ = 0,4 J/gK). λ_{max.} (in CH₂Cl₂) = 321,7 nm (ε = 13620 l/mol cm).

### 7-(6-Hydroxy-hexyloxy)-2H-1-benzopyran-2-on

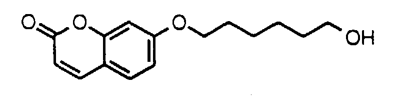

4,87 g (30 mmol) 7-Hydroxy-cumarin, 6,17 g (45,2 mmol) 6-Chloro-hexanol und 6,56 g (47,5 mmol) Kaliumcarbonat wurden mit 50 ml absolutem N,N-Dimethylformamid versetzt und über Nacht bei 100 °C gerührt. Anschliessend wurde der Ansatz auf Wasser gegossen. Der sich abscheidende weisse Niederschlag wurde abfiltriert und mit Wasser nachgewaschen. Die Mutterlauge wurde im Vakuum bis zur Trockne eingedampft, in wenig Wasser aufgenommen und mehrfach mit Essigester extrahiert. Der Niederschlag und die Essigesterphasen wurden vereinigt, über Natriumsulfat getrocknet, eingedampft und zur Feinreinigung mit einem Laufmittelgemisch aus Essigester und Cyclohexan im Verhältnis 1:1 an Kieselgel chromatographiert. Daraus resultierten 7 g 7-(6-Hydroxy-hexyloxy)-2H-1-benzopyran-2-on als weisse Kristalle.

### 2-Methyl-acrylsäure 6-(2-oxo-2H-1-benzopyran-7-yloxy)-hexyl ester

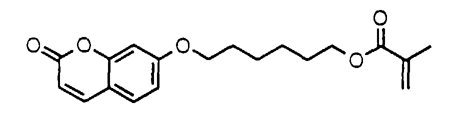

4,2 g (16 mmol) 7-(6-Hydroxy-hexyloxy)-2H-1-benzopyran-2-on wurden unter Feuchtigkeitsauschluss in 40 ml absolutem Tetrahydrofuran gelöst, mit 1,82 g (18 mmol) Triethylamin, 0,004 g (0,3 mmol) 4-Dimethylaminopyridin und einer Spatelspitze 2,6-Di-tert.-butyl-p-kresol versetzt und auf 0 °C abgekühlt. Zu dieser Lösung wurden innerhalb von 10 min 1,7 ml Methacrylsäurechlorid getropft. Es wurde eine Stunde bei 0 °C und eine weitere Stunde bei Raumtemperatur gerührt. Anschliessend wurde der ausgefallene weisse Niederschlag abfiltriert und mit Tetrahydrofuran nachgewaschen. Das Filtrat wurde bis zur Trockne eingedampft und der Rückstand an Kieselgel mit Aceton/Cyclohexan (1:4) chromatographiert. Auf diese Weise wurden 4 g 2-Methyl-acrylsäure 6-(2-oxo-2H-1-benzopyran-7-yloxy)-hexyl ester als farblose Flüssigkeit gewonnen. λ_{max.} (in CH₂Cl₂) = 322,7 nm (ε = 15110 l/mol cm).

In analoger Weise lassen sich folgende Polymere synthetisieren:
Poly [1-methyl-1-[6-(4-methyl-2-oxo-2H-1-benzopyran-7-yloxy)-hexyloxycarbonyl]-ethylen];
Poly [1-methyl-1-[6-(4-trifluoromethyl-2-oxo-2H-1-benzopyran-7-yloxy)-hexyloxycarbonyl]-ethylen];
Poly [1-methyl-1-[6-(3,4-dimethyl-2-oxo-2H-1-benzopyran-7-yloxy)-hexyloxycarbonyl]-ethylen];
Poly [1-methyl-1-[3-(2-oxo-2H-1-benzopyran-7-yloxy)-propoxycarbonyl]-ethylen];
Poly [1-methyl-1-[4-(2-oxo-2H-1-benzopyran-7-yloxy)-butoxycarbonyl]-ethylen];
Poly [1-methyl-1-[5-(2-oxo-2H-1-benzopyran-7-yloxy)-pentoxycarbonyl]-ethylen];
Poly [1-methyl-1-[7-(2-oxo-2H-1-benzopyran-7-yloxy)-heptyloxycarbonyl]-ethylen];
Poly [1-methyl-1-[8-(2-oxo-2H-1-benzopyran-7-yloxy)-octyloxycarbonyl]-ethylen];
Poly [1-[3-(2-oxo-2H-1-benzopyran-7-yloxy)-propoxycarbonyl]-ethylen];
Poly [1-[4-(2-oxo-2H-1-benzopyran-7-yloxy)-butoxycarbonyl]-ethylen];
Poly [1-[5-(2-oxo-2H-1-benzopyran-7-yloxy)-pentoxycarbonyl]-ethylen];
Poly [1-[6-(2-oxo-2H- 1-benzopyran-7-yloxy)-hexyloxycarbonyl]-ethylen];
Poly [1-[7-(2-oxo-2H-1-benzopyran-7-yloxy)-heptyloxycarbonyl]-ethylen];
Poly [1-[8-(2-oxo-2H-1-benzopyran-7-yloxy)-octyloxycarbonyl]-ethylen].

### Beispiel 10:

### Poly [1-(2-oxo-2H-1-benzopyran-7-yl)-ethylen]

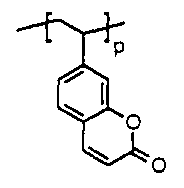

0,4 g (2,3 mmol) 7-Vinyl-2H-1-benzopyran-2-on und 0,0038 g (0,023 mmol) 2,2'-Azo-bis-isobutyronitril wurden in 6,2 ml N,N-Dimethylformamid gelöst. Die Lösung wurde 15 Minuten mit einem schwachen Argonstrom durchspült. Anschliessend wurde das Reaktionsgefäss luftdicht verschlossen und auf 60 °C erhitzt. Nach 22 Stunden wurde das Gefäss geöffnet und unter starkem Rühren bei Raumtemperatur in 800 ml Methanol getropft. Das ausgefallene Polymer wurde abfiltriert und bei 60 °C im Wasserstrahlvakuum getrocknet. Zur weiteren Reinigung wurde das Polymer in 3 ml Dichlormethan gelöst und in 800 ml Diethylether ausgefällt. Dieser Vorgang wurde solange wiederholt, bis dünnschichtchromatographisch kein Monomer mehr nachweisbar war. Filtrieren und Trocknen bei 60 °C im Vakuum ergaben 0,175 g Poly [1-(2-oxo-2H-1-benzopyran-7-yl)-ethylen] als weisses Pulver mit einer Glastufe von T_{g} = 211 °C (Δcₚ = 0,26 J/gK). λ_{max.} (in CH₂Cl₂) = 312,6 nm (ε = 7565 l/mol cm) und 282,3 nm (ε = 9760 l/mol cm).

Das als Ausgangsmaterial verwendete 7-Vinyl-2H-1-benzopyran-2-on wurde nach folgendem Verfahren hergestellt:

### 7-Bromomethyl-2H-1-benzopyran-2-on

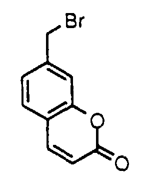

10 g (62,4 mmol) 7-Methyl-cumarin wurden in 115 ml Tetrachlorkohlenstoff suspendiert. Nach Zugabe von 12,2 g (68,7 mmol) N-Bromsuccinimid und 0,122 g (0,5 mmol) Benzoylperoxid wurde das Reaktionsgemisch 7 Stunden unter Rückfluss gekocht. Nach Abkühlung auf Raumtemperatur wurde filtriert. Der Rückstand wurde nacheinander mit Tetrachlorkohlenstoff und wenig Diethylether gewaschen und anschliessend in 500 ml Wasser digeriert. Das Rohprodukt wurde abfiltriert, getrocknet und aus ca. 150 ml Aceton umkristallisiert. Nach Trocknen im Wasserstrahlvakuum bei 60 °C ergaben sich 11 g 7-Bromomethyl-2H-1-benzopyran-2-on als weisse Kristalle.

### 7-Formyl-2H-1-benzopyran-2-on

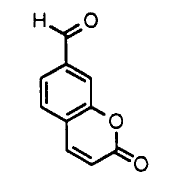

5,13 g (36,6 mmol) Hexamethylentetramin wurden in 30 ml 50 %iger Essigsäure gelöst. Zu dieser Lösung wurden unter Rühren 7 g (29,3 mmol) 7-Bromomethyl-2H-1-benzopyran-2-on portionsweise zugegeben. Der Ansatz wurde 4 Stunden unter Rückfluss gekocht und nach Abkühlen auf Raumtemperatur filtriert. Der Rückstand wurde mit viel Wasser gewaschen und über Nacht bei 60 °C im Vakuum getrocknet. Dies ergab 3,14 g 7-Formyl-2H-1-benzopyran-2-on als feines weisses Pulver.

### 7-Vinyl-2H-1-benzopyran-2-on

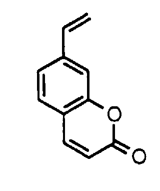

9,23 g (25,8 mmol) Methyltriphenylphosphoniumbromid wurden unter Feuchtigkeitsauschluss und Stickstoffbegasung in 100 ml Tetrahydrofuran suspendiert und vorsichtig mit 3,1 g (27,6 mmol) Kalium-tert.-butylat versetzt. Der Ansatz wurde 4 Stunden bei Raumtemperatur gerührt und dann auf 0 °C abgekühlt. Zu diesem Gemisch wurde innerhalb von 20 min eine Suspension aus 3 g (17,2 mmol) 7-Formyl-2H-1-benzopyran-2-on in 100 ml Tetrahydrofuran portionsweise zugegeben. Anschliessend wurde über Nacht bei Raumtemperatur gerührt. Zur Aufarbeitung wurde der Reaktionsansatz in eine verdünnte HCl-Lösung gegossen. Die HCl-Phase wurde mehrfach mit Dichlormethan extrahiert. Die vereinigten organischen Extrakte wurden über MgSO₄ getrocknet und im Vakuum bis zur Trockne eingeengt. Der Rückstand wurde an Kieselgel chromatographiert. Als Eluens wurde zunächst reines Dichlormethan, dann eine Mischung aus Dichlormethan und Diethylether im Verhältnis 9:1 eingesetzt. Die Produktfraktionen wurden vereinigt, im Vakuum stark eingeengt und mit Cyclohexan versetzt. Nachdem die Hauptmenge an Dichlormethan abdestilliert war, kristallisierte das Produkt über Nacht aus. Es wurde abfiltriert, mit Cyclohexan gewaschen und noch einmal aus einem Isopropanol/Cyclohexan-Gemisch umkristallisiert. Dies ergab 0,863 g 7-Vinyl-2H-1-benzopyran-2-on in Form weisser Kristalle.

Durch Copolymerisation mit 7-Vinyl-2H-1-benzopyran-2-on lassen sich folgende Polymere synthetisieren:
Poly [1-(2-oxo-2H-1-benzopyran-7-yl)-ethylen-co-maleinimid];
Poly [1-(2-oxo-2H-1-benzopyran-7-yl)-ethylen-co-styrol];
Poly [1-(2-oxo-2H-1-benzopyran-7-yl)-ethylen-co-methylmetharylat];
Poly [1-(2-oxo-2H-1-benzopyran-7-yl)-ethylen-co-ethylmetharylat];
Poly [1-(2-oxo-2H-1-benzopyran-7-yl)-ethylen-co-propylmetharylat];
Poly [1-(2-oxo-2H-1-benzopyran-7-yl)-ethylen-co-methylarylat];
Poly [1-(2-oxo-2H-1-benzopyran-7-yl)-ethylen-co-ethylarylat];
Poly [1-(2-oxo-2H-1-benzopyran-7-yl)-ethylen-co-hexylarylat];
Poly [1-(2-oxo-2H-1-benzopyran-7-yl)-ethylen-co-hydroxyethylmethacrylat];
Poly [1-(2-oxo-2H-1-benzopyran-7-yl)-ethylen-co-methacrylnitril];
Poly [1-(2-oxo-2H-1-benzopyran-7-yl)-ethylen-co-acrylnitril].

### Beispiel 11:

### Poly[1-methyl-1-[2-(4-nitro-phenoxy)-ethoxycarbonyl]-ethylen-co-1-methyl-1-[2-(2-oxo-2H-1-benzopyran-7-yloxy)-ethoxycarbonyl]-ethylen] (6:4)

### Copolymerdarstellung durch polymeranaloge Veretherung nach Mitsunobu

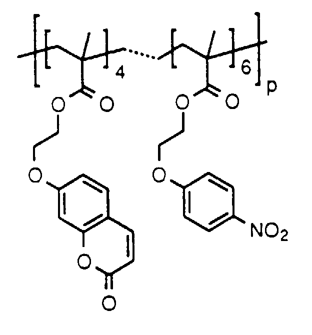

2,5 g (4,1 mmol) einer Stammlösung von Poly (2-hydroxy-ethyl methacrylat) (21 Gew. % in DMA) wurden mit 7,5 ml Dimethylacetamid (DMA) verdünnt. Unter Rühren wurden bei Raumtemperatur 0,78 g (4,8 mmol) 7-Hydroxy-cumarin, 0,45 g (3,2 mmol) p-Nitrophenol und 2,32 g (8,9 mmol) Triphenylphosphin im Reaktionsansatz gelöst. Die Lösung wurde auf 0 °C abgekühlt. Innerhalb von 60 Minuten wurden 1,38 ml (8,9 mmol) Azodicarbonsäure-diäthylester (DEAD) zugetropft. Der Reaktionsansatz wurde noch 15 Minuten bei 0 °C belassen und nach Entfernung des Eisbades 72 Stunden bei Raumtemperatur gerührt. Zur Aufarbeitung wurde die Polymerlösung unter starkem Rühren in 1,51 Methanol getropft. Das ausgefallene Polymer wurde abfiltriert und bei 60 °C im Wasserstrahlvakuum getrocknet. Zur weiteren Reinigung wurde der Rückstand in 6 ml Dichlormethan gelöst und in 1,5 l Diethylether ausgefällt. Dieser Vorgang wurde solange wiederholt, bis dünnschichtchromatographisch kein Monomer mehr nachweisbar war. Filtrieren und Trocknen bei 60 °C im Vakuum ergaben 0,95 g Poly [1-methyl-1-[2-(4-nitro-phenoxy)-ethoxycarbonyl]-ethylen-co-1-methyl-1-[2-(2-oxo-2H-1-benzopyran-7-yloxy)-ethoxycarbonyl]-ethylen] (6:4) als weisses Pulver mit einer Glastufe von T_{g} = 100 °C (Δcₚ = 0,36 J/gK). λ_{max.} (in CH₂Cl₂) = 311,2 nm.

In analoger Weise lassen sich folgende Polymere synthetisieren:
Poly [1-methyl-1-[2-(2-oxo-2H-1-benzopyran-7-yloxy)-ethoxycarbonyl]-ethylen-co-1-methyl-1-[2-(4-phenoxy)-ethoxycarbonyl]-ethylen];
Poly [1-methyl-1-[2-(4-methyl-phenoxy)-ethoxycarbonyl]-ethylen-co-1-methyl-1-[2-(2-oxo-2H-1-benzopyran-7-yloxy)-ethoxycarbonyl]-ethylen];
Poly [1-methyl-1-[2-(4-methoxy-phenoxy)-ethoxycarbonyl]-ethylen-co-1-methyl-1-[2-(2-oxo-2H-1-benzopyran-7-yloxy)-ethoxycarbonyl]-ethylen];
Poly [1-methyl-1-[2-(4-cyano-phenoxy)-ethoxycarbonyl]-ethylen-co-1-methyl-1-[2-(2-oxo-2H-1-benzopyran-7-yloxy)-ethoxycarbonyl]-ethylen];
Poly [1-methyl-1-[2-(4-methyl-2-oxo-2H-1-benzopyran-7-yloxy)-ethoxycarbonyl]-ethylen-co-1-methyl-1-[2-(4-phenoxy)-ethoxycarbonyl]-ethylen];
Poly [1-methyl-1-[2-(4-methyl-2-oxo-2H-1-benzopyran-7-yloxy)-ethoxycarbonyl]-ethylen-co-1-methyl-1-[2-(4-nitro-phenoxy)-ethoxycarbonyl]-ethylen].

## Patentansprüche

1. Zur Herstellung von Orientierungsschichten für elektro-optische Flüssigkristallvorrichtungen bestimmte Polymere der allgemeinen Formel 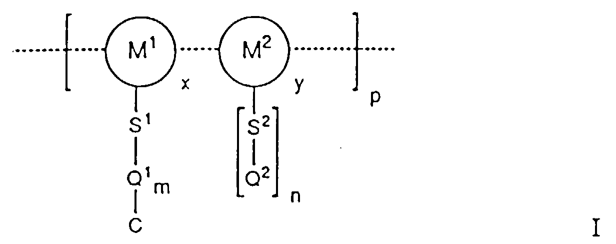 worin
M¹ und M² Monomereinheiten für Homo- bzw. Copolymere bedeuten;
x und y Molenbrüche der Comonomeren angeben, wobei jeweils 0 < x ≤ 1 und 0 ≤ y < 1 und x + y = 1 ist;
p 4 bis 30 000;
S¹ und S² unabhängig voneinander Spacereinheiten oder einfache Kovalenzbindungen;
Q¹ eine Struktureinheit der Formel
-A-(Z¹-B)_{z}-Z²- IIa;
Q² eine Struktureinheit der Formel
-A-(Z¹-B)_{z}-R¹ IIb;
A und B unabhängig voneinander Pyridin-2,5-diyl, Pyrimidin-2,5-diyl, 1,4-Cyclohexylen, 1,3-Dioxan-2,5-diyl oder gegebenenfalls substituiertes 1,4-Phenylen;
Z¹ und Z² unabhängig voneinander eine einfache Kovalenzbindung, -CH₂-CH₂-, -CH₂O-, -OCH₂-, -CONR-, -RNCO-, -COO- oder -OOC-;
R Wasserstoff oder niederes Alkyl mit 1-5 Kohlenstoffatomen;
R¹ Wasserstoff, gegebenenfalls substituiertes Alkyl oder Alkoxy mit jeweils 1 bis 12 Kohlenstoffatomen, Cyano, Nitro oder Halogen;
z 0 oder 1;
C ein photochemisch dimerisierbares Cumarin- oder Chinolinon-Derivat; und
m und n unabhängig voneinander 0 oder 1 bedeuten,
wobei [C-Q¹ₘ-S¹] nicht 7-(N-Methacryloyl)aminocumarin und 3-[p-(N-Methacryloyl)aminophenyl]cumarin darstellen darf.

2. Polymere gemäss Anspruch 1, dadurch gekennzeichnet, dass das photochemisch dimerisierbare Cumarin- oder Chinolinon-Derivat (C) eine Verbindung der allgemeinen Formeln 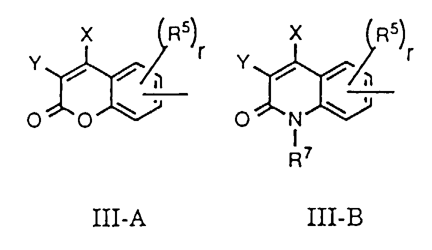 welche in 5-, 6-, 7- oder 8-Stellung mit dem Spacer S¹ bzw. Q¹ verknüpft sein können, bedeutet und worin
R⁵ gegebenenfalls substituiertes Alkyl oder Alkoxy mit jeweils 1 bis 12 Kohlenstoffatomen, Halogen, Cyano oder Nitro;
R⁷ Wasserstoff oder niederes Alkyl mit 1-5 Kohlenstoffatomen;
X Wasserstoff, Alkyl oder Alkoxy mit jeweils 1 bis 8 Kohlenstoffatomen, Trifluormethyl oder gegebenenfalls substituiertes Phenyl;
Y Wasserstoff, Alkyl oder Alkoxy mit jeweils 1 bis 8 Kohlenstoffatomen, Cyano oder -COOR⁶;
R⁶ niederes Alkyl mit 1-5 Kohlenstoffatomen, und
r eine ganze Zahl von 1 bis 3 bedeuten.

3. Polymere gemäss Anspruch 1 oder 2 der allgemeinen Formel 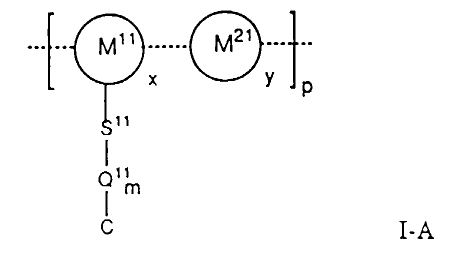 worin
M¹¹ und M²¹ unabhängig voneinander Ethylen, Acrylat, Methacrylat, 2-Chloracrylat, Acrylamid, Methacrylamid, 2-Chloracrylamid, Styrol Maleinsäure Siloxane, und M²¹ zusätzlich auch Acrylnitril oder Methacrylnitril;
S¹¹ eine einfache Kovalenzbindung, (CH₂)ₜ-, -O(CH₂)ₜ-,-(CH₂)ₜO-, O(CH₂)ₜO- -OOC(CH₂)ₜ-, -COO(CH₂)ₜ-, -(CH₂)ₜCOO-, -(CH₂)ₜOOC-, -(CH₂)ₜNR²-, Cycloalkylen mit 5 oder 6 Kohlenstoffatomen, Piperidindiyl, Piperazindiyl, Phenylen, Carbonat (-OCOO-), Ester (-COO-, -OOC-), Amid (-CONR²-, -R²NCO-), Ether (-O-), Amino (-NR²-) oder eine Kombination dieser Gruppen;
R² Wasserstoff oder niederes Alkyl mit 1 bis 5 Kohlenstoffatomen;
t eine ganze Zahl von 1 bis 6;
Q11
-A¹(Z¹¹-B¹)_{z}-Z²- IIa-1
A¹ und B¹ unabhängig voneinander 1,4-Phenylen, Pyridin-2,5-diyl, Pyrimidin-2,5-diyl, 1,4-Cyclohexylen oder 1,3-Dioxan-2,5-diyl, mit der Massgabe, dass nicht mehr als einer der Ringe A¹ und B¹ einen Heterozyklus bedeutet;
Z¹¹ eine einfache Kovalenzbindung, -CH₂CH₂-, -COO- oder -OOC- bedeuten; und
p, C, Z² und z wie in den Ansprüchen 1 oder 2 definiert sind.

4. Copolymere gemäss Anspruch 3, dadurch gekennzeichnet, dass M¹¹ und M²¹ unabhängig voneinander Ethylen, Acrylat, Methacrylat, Acrylamid, Methacrylamid, Styrol; und M²¹ zusätzlich auch Acrylnitril oder Methacrylnitril; S¹¹ eine einfache Kovalenzbindung, - (CH₂)ₜ-, -O(CH₂)ₜ-, -(CH₂)ₜO-, -O(CH₂)ₜO-, -OOC(CH₂)ₜ- -COO(CH₂)ₜ-, -(CH₂)ₜCOO-, -(CH₂)ₜOOC-, -(CH2)ₜNR²- Cycloalkylen mit 5 oder 6 Kohlenstoffatomen, Phenylen, Carbonat (-OCOO-), Ester (-COO-, -OOC-), Amid (-CONR²-, -R²NCO-), Ether (-O-), Amino (-NR²-) oder eine Kombination dieser Gruppen; und A¹ und B¹ unabhängig voneinander 1,4-Phenylen, Pyridin-2,5-diyl, Pyrimidin-2,5-diyl oder 1,4-Cyclohexylen bedeuten, mit der Massgabe, dass nicht mehr als einer der Ringe A¹ und B¹ einen Heterozyklus bedeutet.

5. Copolymere gemäss Anspruch 3 oder 4, dadurch gekennzeichnet, dass M²¹ Methylacrylat, Methylmethacrylat oder auch Hydroxyalkylacrylat oder Hydroxyalkylmethacrylat darstellt.

6. Copolymere gemäss einem der Ansprüche 1 bis 5, worin das Cumarin-Derivat (C) in der 6- bzw. 7-Stellung mit S¹¹ oder mit Z² verknüpft ist, der Formeln 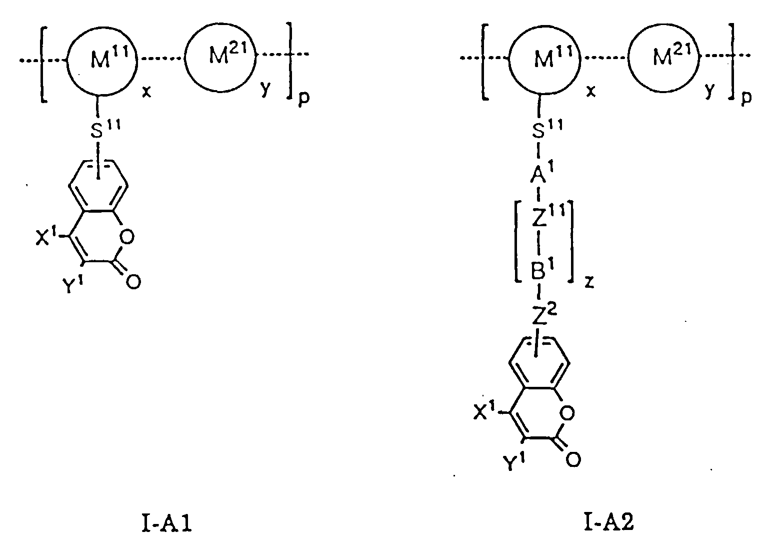 worin
X¹ Wasserstoff, Alkyl oder Alkoxy mit jeweils 1 bis 4 Kohlenstoßatomen oder Trifluormethyl;
Y¹ Wasserstoff, Alkyl oder Alkoxy mit jeweils 1 bis 4 Kohlenstoffatomen bedeuten; und
die übrigen Symbole die in den Ansprüchen 1 bis 4 angegeben Bedeutungen haben.

7. Copolymere gemäss Anspruch 6, dadurch gekennzeichnet, dass X¹ Wasserstoff, Alkyl oder Alkoxy mit jeweils 1 bis 4 Kohlenstoffatomen; Y¹ Wasserstoff oder Alkyl mit 1 bis 4 Kohlenstoffatomen; M¹¹ und M²¹ Ethylen, Acrylat, Methacrylat oder Styrol; A¹ und B¹ Phenylen oder Cyclohexylen; und S¹¹ eine einfache Kovalenzbindung, -(CH₂)ₜ-, - (CH₂)ₜO-, - (CH₂)ₜCOO-, -(CH₂)ₜOOC- -(CH₂)ₜNR²- oder Amino (-NR²-) bedeuten.

8. Copolymere gemäss Anspruch 7, dadurch gekennzeichnet, dass M²¹ Hydroxyalkylacrylat oder Hydroxyalkylmethacrylat darstellt.

9. Polymere gemäss Anspruch 1 oder 2, der Formel 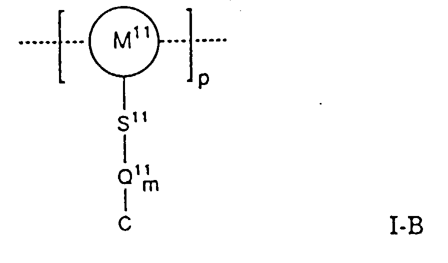 worin
M¹¹ Ethylen, Acrylat, Methacrylat, 2-Chloracrylat, Acrylamid, Methacrylamid, 2-Chloracrylamid, Styrol Maleinsäure oder Siloxane;
S¹¹ eine einfache Kovalenzbindung, -(CH₂)ₜ-, -O(CH₂)ₜ-, -(CH₂)ₜO-, -O(CH₂)ₜO-, -OOC(CH₂)ₜ-, -COO(CH₂)ₜ-, -(CH₂)ₜCOO-, -(CH₂)ₜOOC-, -(CH₂)ₜNR²-, Cycloalkylen mit 5 oder 6 Kohlenstoffatomen, Piperidindiyl, Piperazindiyl, Phenylen, Carbonat (-OCOO-), Ester (-COO-, -OOC-), Amid (-CONR²-, -R²NCO-), Ether (-O-), Amino (-NR²-) oder eine Kombination dieser Gruppen;
t eine ganze Zahl von 1 bis 6;
Q¹¹
-A¹-(Z¹¹-B¹)_{z}-Z²- IIa-1
A¹ und B¹ unabhängig voneinander 1,4-Phenylen, Pyridin-2,5-diyl, Pyrimidin-2,5-diyl, 1,4-Cyclohexylen oder 1,3-Dioxan-2,5-diyl, mit der Massgabe, dass nicht mehr als einer der Ringe A¹ und B¹ einen Heterozyklus bedeutet;
Z¹¹ eine einfache Kovalenzbindung, -CH₂CH₂-, -COO- oder -OOC- bedeuten; und
R², p, C, Z² und z wie in den Ansprüchen 1 oder 2 definiert sind.

10. Homopolymere nach Anspruch 9, dadurch gekennzeichnet, dass M¹¹ Ethylen, Acrylat, Methacrylat, Acrylamid, Methacrylamid, Styrol; S¹¹ eine einfache Kovalenzbindung, -(CH₂)ₜ-, -O(CH₂)ₜ-, -(CH₂)ₜO-, -O(CH₂)ₜO-, -OOC(CH₂)ₜ-, -COO(CH₂)ₜ-, -(CH₂)ₜCOO-, -(CH₂)ₜOOC-, (CH₂)ₜNR²-, Cycloalkylen mit 5 oder 6 Kohlenstoffatomen, Phenylen, Carbonat (-OCOO-), Ester (-COO-, -OOC-), Amid (-CONR²-, -R²NCO-), Ether (-O-), Amino (-NR²-) oder eine Kombination dieser Gruppen; und A¹ und B¹ unabhängig voneinander 1,4-Phenylen, Pyridin-2,5-diyl, Pyrimidin-2,5-diyl oder 1,4-Cyclohexylen, mit der Massgabe, dass nicht mehr als einer der Ringe A¹ und B¹ einen Heterozyklus bedeutet.

11. Homopolymere gemäss einem der Ansprüche 1, 2, 9 oder 10, wonn das Cumarin-Derivat (C) in der 6- bzw. 7-Stellung mit S¹¹ oder mit Z² verknüpft ist, der Formeln 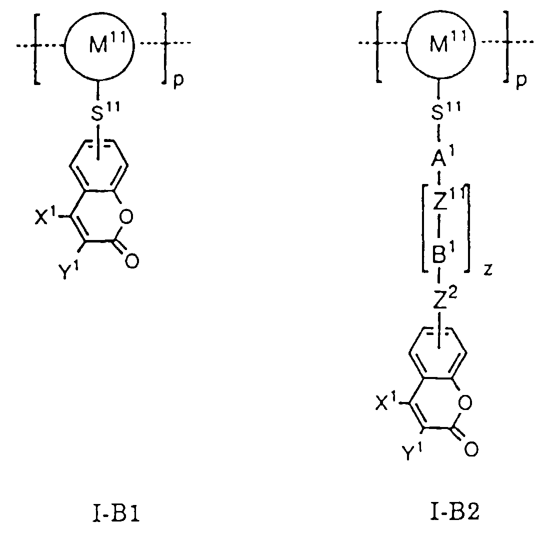 worin
X¹ Wasserstoff, Alkyl oder Alkoxy mit jeweils 1 bis 4 Kohlenstoffatomen oder Trifluormethyl;
Y¹ Wasserstoff, Alkyl oder Alkoxy mit jeweils 1 bis 4 Kohlenstoffatomen bedeuten; und
die übrigen Symbole die in einem der Ansprüche 1, 2, 9 oder 10 genannten Bedeutungen haben.

12. Polymere nach Anspruch 11, dadurch gekennzeichnet, dass X¹ Wasserstoff, Alkyl oder Alkoxy mit jeweils 1 bis 4 Kohlenstoffatomen; Y¹ Wasserstoff oder Alkyl mit 1 bis 4 Kohlenstoffatomen; M¹¹ Ethylen, Acrylat, Methacrylat oder Styrol; A¹ und B¹ Phenylen oder Cyclohexylen; und S¹¹ eine einfache Kovalenzbindung, -(CH₂)ₜ-, -(CH₂)ₜO-, -(CH₂)ₜCOO-, -(CH₂)ₜOOC-, -(CH₂)ₜNR²- oder Amino (-NR²-) bedeuten.

13. Polymere gemäss einem der Ansprüche 2 bis 12, dadurch gekennzeichnet, dass das Cumarin-Derivat (C) der Formel III-A in 7-Stellung mit S¹, S¹¹ bzw. mit Z² verknüpft ist.

14. Die Homopolymere
Poly [1-methyl-1-(2-oxo-2H-1-benzopyran-7-yloxycarbonyl)-ethylen];
Poly [1-methyl-1-(4-methyl-2-oxo-2H-1-benzopyran-7-yloxycarbonyl)-ethylen];
Poly [1-methyl-1-[2-(2-oxo-2H-1-benzopyran-7-yloxy)-ethoxycarbonyl]-ethylen];
Poly [1-[2-(3-ethoxycarbonyl-2-oxo-2H-1-benzopyran-7-yloxy)-ethoxycarbonyl]-1-methyl-ethylen];
Poly [1-methyl-1-[2-(4-methyl-2-oxo-2H-1-benzopyran-7-yloxy)-ethoxycarbonyl]-ethylen];
Poly [1-[2-(4-ethyl-2-oxo-2H-1-benzopyran-7-yloxy)-ethoxycarbonyl]-1-methyl-ethylen],
Poly [1-methyl-1-[2-(4-trifluoromethyl-2-oxo-2H-1-benzopyran-7-yloxy)-ethoxycarbonyl]-ethylen];
Poly [1-[2-(3-chloro-4-methyl-2-oxo-2H-1-benzopyran-7-yloxy)-ethoxycarbonyl]-1-methyl-ethylen];
Poly [1-methyl-1-[2-(4-methyl-8-nitro-2-oxo-2H-1-benzopyran-7-yloxy)-ethoxycarbonyl]-ethylen];
Poly [1-methyl-1-[2-(3,4,8-trimethyl-2-oxo-2H-1-benzopyran-7-yloxy)-ethoxycarbonyl]-ethylen];
Poly [1-methyl-1-[4-(2-oxo-2H-1-benzopyran-7-yloxy)-piperidin-1-ylcarbonyl]-ethylen];
Poly [1-methyl-1-[6-[4-(2-oxo-2H-1-benzopyran-7-yloxycarbonyl)-phenoxy]-hexyloxycarbonyl]-ethylen];
Poly [oxy-methyl-[4-[4-(2-oxo-2H-1-benzopyran-7-yloxycarbonyl)-phenoxy]-butyl]-silylen];
Poly [1-methyl-1-[6-(2-oxo-2H-1-benzopyran-7-yloxy)-hexyloxycarbonyl]-ethylen]; und
Poly [1-(2-oxo-2H-1-benzopyran-7-yl)-ethylen].

15. Die Copolymere
Poly [1-[2-(4-methyl-2-oxo-2H-1-benzopyran-6-yloxy)-ethoxycarbonyl]-1-methyl-ethylen-co-1-[2-hydroxy-ethoxycarbonyl]-1-methyl-ethylen];
Poly [1-methyl-1-[2-(4-n-propyl-2-oxo-2H-1-benzopyran-7-yloxy)-ethoxycarbonyl]-ethylen-co-1-(2-hydroxy-ethoxycarbonyl)-1-methyl-ethylen];
Poly [1-methyl-1-[2-(4-trifluoromethyl-2-oxo-2H-1-benzopyran-7-yloxy)-ethoxycarbonyl]-ethylen-co-1-(2-hydroxy-ethoxycarbonyl)-1-methyl-ethylen];
Poly [1-[2-(3,4-dimethyl-2-oxo-2H-1-benzopyran-7-yloxy)-ethoxycarbonyl]-1-methyl-ethylen-co-1-(2-hydroxy-ethoxycarbonyl)-1-methyl-ethylen];
Poly [1-methyl-1-[2-(4-phenyl-2-oxo-2H-1-benzopyran-7-yloxy)-ethoxycarbonyl]-ethylen-co-1-(2-hydroxy-ethoxycarbonyl)-1-methyl-ethylen];
Poly [1-methyl-1-[2-(2-oxo-1,2-dihydro-chinolin-7-yloxy)-ethoxycarbonyl]-ethylen-co- 1-(2-hydroxy-ethoxycarbonyl)-1-methyl-ethylen];
Poly [1-methoxycarbonyl-1-methyl-ethylen-co-1-methyl-1-(2-oxo-2H-1-benzopyran-7-yloxycarbonyl)-ethylen];
Poly [1-(2-hydroxy-ethoxycarbonyl)-1-methyl-ethylen-co-1-methyl-1-(2-oxo-2H-1-benzopyran-7-yloxycarbonyl)-ethylen];
Poly [1-[6-[4-(4-methoxy-phenyloxycarbonyl)-phenoxy]-hexyloxycarbonyl]-1-methyl-ethylen-co-1-methyl-1-[6-[4-(2-oxo-2H-1-benzopyran-7-yloxycarbonyl)-phenoxy]-hexyloxycarbonyl]-ethylen]; und
Poly [1-methyl-1-[2-(4-nitro-phenoxy)-ethoxycarbonyl]-ethylen-co-1-methyl-1-[2-(2-oxo-2H-1-benzopyran-7-yloxy)-ethoxycarbonyl]-ethylen];

16. Verwendung der Polymere gemäss einem der Ansprüche 1 bis 15 zur Herstellung von Orientierungsschichten.

## Claims

1. Polymers, intended for the production of orientation layers for electro-optical liquid crystal devices, having the general formula 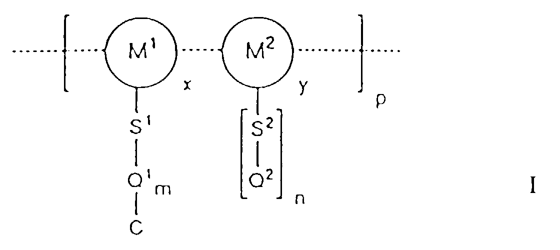 wherein
M¹ and M² represent monomer units for homo- or co-polymers;
x and y indicate mole fractions of the comonomers, in each case 0 < x ≤ 1 and 0 ≤ y < 1 and x + y = 1;
p represents from 4 to 30 000;
S¹ and S² each independently of the other represent spacer units or single covalent bonds;
Q¹ represents a structural unit of the formula
-A-(Z¹-B)_{z}-Z²- IIa;
Q² represents a structural unit of the formula
-A-(Z¹-B)_{z}-R¹ IIb;
A and B each independently of the other represent pyridine-2,5-diyl, pyrimidine-2,5-diyl, 1,4-cyclohexylene, 1,3-dioxane-2,5-diyl or optionally substituted 1,4-phenylene;
Z¹ and Z² each indepcndently of the other represent a single covalent bond, -CH₂-CH₂-, -CH₂O-, -OCH₂-, -CONR-, -RNCO-, -COO- or -OOC-;
R represents hydrogen or lower alkyl having from 1 to 5 carbon atoms;
R¹ represents hydrogen, optionally substituted alkyl or alkoxy each having from 1 to 12 carbon atoms, cyano, nitro or halogen;
z represents 0 or 1;
C represents a photochemically dimerisable coumarin or quinolinone derivative; and
m and n each independently of the other represent 0 or 1,
but [C-Q¹ₘ-S¹] may not represent 7-(N-methacryloyl)aminocoumarin or 3-[p-(N-methacryloyl)aminophenyl]coumarin.

2. Polymers according to claim 1, characterised in that the photochemically dimerisable coumarin or quinolinone derivative (C) is a compound of the general formula 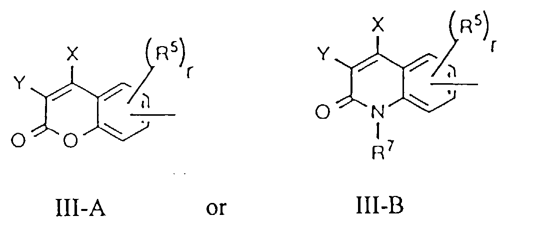 which may be linked in the 5-, 6-, 7- or 8-position to the spacer S¹ or Q¹, as the case may be, and wherein
R⁵ represents optionally substituted alkyl or alkoxy each having from 1 to 12 carbon atoms, halogen, cyano or nitro;
R⁷ represents hydrogen or lower alkyl having from 1 to 5 carbon atoms;
X represents hydrogen, alkyl or alkoxy each having from 1 to 8 carbon atoms, trifluoromethyl or optionally substituted phenyl;
Y represents hydrogen, alkyl or alkoxy each having from 1 to 8 carbon atoms, cyano or -COOR⁶;
R⁶ rcpresents lower alkyl having from 1 to 5 carbon atoms, and
r is an integer from 1 to 3.

3. Polymers according to claim 1 or 2 of the general formula 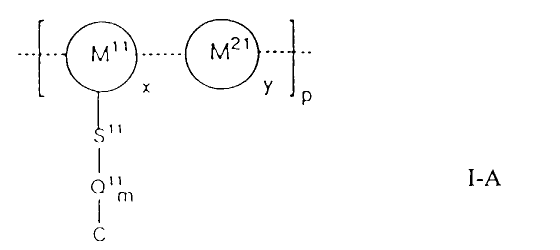 wherein
M¹¹ and M²¹ each independently of the other represent ethylene, acrylate, methacrylate, 2-chloroacrylate, acrylamide, methacrylamide, 2-chloroacrylamide, styrene, maleic acid, siloxane, and M²¹ may additionally also represent acrylonitrile or methacrylonitrile;
S¹¹ represents a single covalent bond, -(CH₂)ₜ-, -O(CH₂)ₜ-, -(CH₂)ₜO-, -O(CH₂)ₜO-, -OOC(CH₂)ₜ-, -COO(CH₂)ₜ-, -(CH₂)ₜCOO-, -(CH₂)ₜOOC-, -(CH₂)ₜNR²-, cycloalkylene having 5 or 6 carbon atoms, piperidinediyl, piperazinediyl, phenylene, carbonate (-OCOO-), ester (-COO-, -OOC-), amide (-CONR²-, -R²NCO-), ether (-O-), amino (-NR²-) or a combination of those groups;
R² represents hydrogen or lower alkyl having from 1 to 5 carbon atoms;
t represents an integer from 1 to 6;
Q¹¹ represents
-A¹-(Z¹¹-B¹)_{z}-Z²- IIa-1;
A¹ and B¹ each independently of the other represent 1,4-phenylene, pyridine-2,5-diyl, pyrimidine-2,5-diyl, 1,4-cyclohexylene or 1,3-dioxane-2,5-diyl, with the proviso that not more than one of the rings A¹ and B¹ represents a heterocycle;
Z¹¹ represents a single covalent bond, -CH₂CH₂-, -COO- or -OOC-; and
p, C, Z² and z are as defined in claim 1 or 2.

4. Copolymers according to claim 3, characterised in that M¹¹ and M²¹ each independently of the other represent ethylene, acrylate, methacrylate, acrylamide, methacrylamide, styrene; and M²¹ may additionally also represent acrylonitrile or methacrylonitrile; S¹¹ represents a single covalent bond, -(CH₂)ₜ-, -O(CH₂)ₜ-, -(CH₂)ₜO-, -O(CH₂)ₜO-, -OOC(CH₂)ₜ-, -COO(CH₂)ₜ-, -(CH₂)ₜCOO-, -(CH₂)ₜOOC-, -(CH₂)ₜNR²-, cycloalkylene having 5 or 6 carbon atoms, phenylene, carbonate (-OCOO-), ester (-COO-, -OOC-), amide (-CONR²-, -R²NCO-), ether (-O-), amino (-NR²-) or a combination of those groups; and A¹ and B¹ each independently of the other represent 1,4-phenylene, pyridine-2,5-diyl, pyrimidine-2,5-diyl or 1,4-cyclohexylene, with the proviso that not more than one of the rings A¹ and B¹ represents a heterocycle.

5. Copolymers according to claim 3 or 4, characterised in that M²¹ represents methyl acrylate, methyl methacrylate or hydroxyalkyl acrylate or hydroxyalkyl methacrylate.

6. Copolymers according to any one of claims 1 to 5, wherein the coumarin derivative (C) is linked in the 6- or 7-position to S¹¹ or to Z², of the formulae 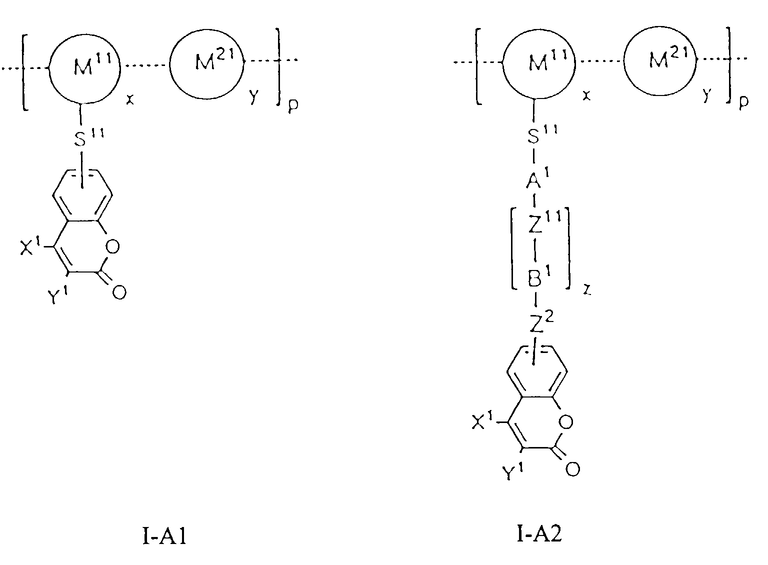 wherein
X¹ represents hydrogen, alkyl or alkoxy each having from 1 to 4 carbon atoms or trifluoromethyl;
Y¹ represents hydrogen, alkyl or alkoxy each having from 1 to 4 carbon atoms; and
the remaining symbols have the meanings given in claims 1 to 4.

7. Copolymers according to claim 6, characterised in that X¹ represents hydrogen, alkyl or alkoxy each having from 1 to 4 carbon atoms; Y¹ represents hydrogen or alkyl having from 1 to 4 carbon atoms; M¹¹ and M²¹ represent ethylene, acrylate, methacrylate or styrene; A¹ and B¹ represent phenylene or cyclohexylene; and S¹¹ represents a single covalent bond, -(CH₂)ₜ-, -(CH₂)ₜO-, -(CH₂)ₜCOO-, -(CH₂)ₜOOC-, -(CH₂)ₜNR²- or amino (-NR²-).

8. Copolymers according to claim 7, characterised in that M²¹ represents hydroxyalkyl acrylate or hydroxyalkyl methacrylate.

9. Polymers according to claim 1 or 2, of the formula 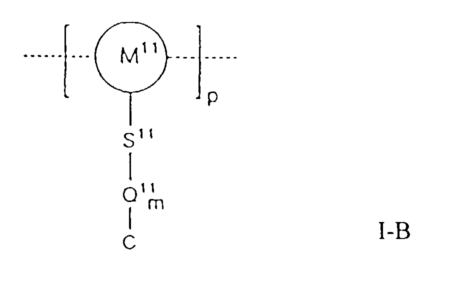 wherein
M¹¹ represents ethylene, acrylate, methacrylate, 2-chloroacrylate, acrylamide, methacrylamide, 2-chloroacrylamide, styrene, maleic acid or siloxane;
S¹¹ represents a single covalent bond, -(CH₂)ₜ-, -O(CH₂)ₜ-, -(CH₂)ₜO-, -O(CH₂)ₜO-, -OOC(CH₂)ₜ-, -COO(CH₂)ₜ-, -(CH₂)ₜCOO-, -(CH₂)ₜOOC-, -(CH₂)ₜNR²-, cycloalkylene having 5 or 6 carbon atoms, piperidinediyl, piperazinediyl, phenylene, carbonate (-OCOO-), ester (-COO-, -OOC-), amide (-CONR²-, -R²NCO-), ether (-O-), amino (-NR²-) or a combination of those groups;
t represents an integer from 1 to 6;
Q¹¹ represents
-A¹-(Z¹¹-B¹)_{z}-Z²- IIa-1;
A¹ and B¹ each independently of the other represent 1,4-phenylene, pyridine-2,5-diyl, pyrimidine-2,5-diyl, 1,4-cyclohexylene or 1,3-dioxane-2,5-diyl, with the proviso that not more than one of the rings A¹ and B¹ represents a heterocycle;
Z¹¹ represents a single covalent bond, -CH₂CH₂-, -COO- or -OOC-; and
R², p, C, Z² and z are as defined in claim 1 or 2.

10. Homopolymers according to claim 9, characterised in that M¹¹ represents ethylene, acrylate, methacrylate, acrylamide, methacrylamide, styrene; S¹¹ represents a single covalent bond, -(CH₂)ₜ-, -O(CH₂)ₜ-, -(CH₂)ₜO-, -O(CH₂)ₜO-, -OOC(CH₂)ₜ-, -COO(CH₂)ₜ-, -(CH₂)ₜCOO-, -(CH₂)ₜOOC-, -(CH₂)ₜNR²-, cycloalkylene having 5 or 6 carbon atoms, phenylene, carbonate (-OCOO-), ester (-COO-, -OOC-), amide (-CONR²-, -R²NCO-), ether (-O-), amino (-NR²-) or a combination of those groups; and A¹ and B¹ each independently of the other represent 1,4-phenylene, pyridine-2,5-diyl, pyrimidine-2,5-diyl or 1,4-cyclohexylene, with the proviso that not more than one of the rings A¹ and B¹ represents a heterocycle.

11. Homopolymers according to any one of claims 1, 2, 9 and 10, wherein the coumarin derivative (C) is linked in the 6- or 7-position to S¹¹ or to Z², of the formulae 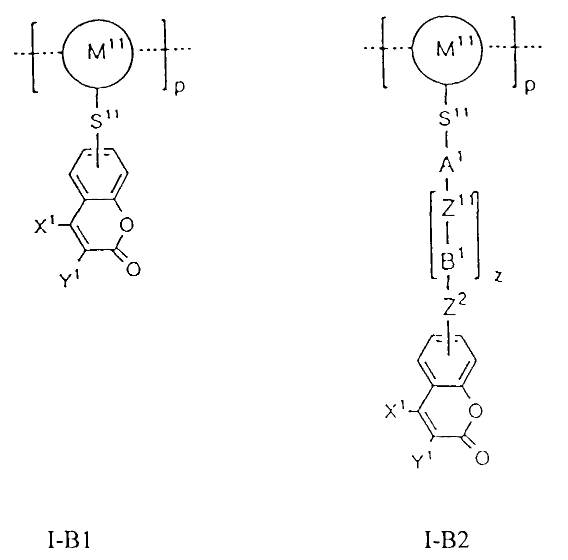 wherein
X¹ represents hydrogen, alkyl or alkoxy each having from 1 to 4 carbon atoms or trifluoromethyl;
Y¹ represents hydrogen, alkyl or alkoxy each having from 1 to 4 carbon atoms; and
the remaining symbols have the meanings mentioned in any one of claims 1, 2, 9 and 10.

12. Polymers according to claim 11, characterised in that X¹ represents hydrogen, alkyl or alkoxy each having from 1 to 4 carbon atoms; Y¹ represents hydrogen or alkyl having from 1 to 4 carbon atoms; M¹¹ represents ethylene, acrylate, methacrylate or styrene; A¹ and B¹ represent phenylene or cyclohexylene; and S¹¹ represents a single covalent bond, -(CH₂)ₜ-, -(CH₂)ₜO-, -(CH₂)ₜCOO-, -(CH₂)ₜOOC-, -(CH₂)ₜNR²- or amino (-NR²-).

13. Polymers according to any one of claims 2 to 12, characterised in that the coumarin derivative (C) of the formula III-A is linked in the 7-position to S¹, S¹¹ or to Z², as the case may be.

14. The homopolymers
poly[1-methyl-1-(2-oxo-2H-1-benzopyran-7-yloxycarbonyl)-ethylene];
poly[1-methyl-1-(4-methyl-2-oxo-2H-1-benzopyran-7-yloxycarbonyl)-ethylene];
poly[1-methyl-1-[2-(2-oxo-2H-1-benzopyran-7-yloxy)-ethoxycarbonyl]-ethylene];
poly[1-[2-(3-ethoxycarbonyl-2-oxo-2H-1-benzopyran-7-yloxy)-ethoxycarbonyl]-1-methyl-ethylene];
poly[1-methyl-1-[2-(4-methyl-2-oxo-2H-1-benzopyran-7-yloxy)-ethoxy-carbonyl]-ethylene];
poly[1-[2-(4-ethyl-2-oxo-2H-1-benzopyran-7-yloxy)-ethoxycarbonyl]-1-methylethylene],
poly[1-methyl-1-[2-(4-trifluoromethyl-2-oxo-2H-1-benzopyran-7-yloxy)-ethoxycarbonyl]-ethylene];
poly[1-[2-(3-chloro-4-methyl-2-oxo-2H-1-benzopyran-7-yloxy)-ethoxy-carbonyl]-1-methyl-ethylene];
poly[1-methyl-1-[2-(4-methyl-8-nitro-2-oxo-2H-1-benzopyran-7-yloxy)-ethoxycarbonyl]-ethylene];
poly[1-methyl-1-[2-(3,4,8-trimethyl-2-oxo-2H-1-benzopyran-7-yloxy)-ethoxycarbonyl]-ethylene];
poly[1-methyl-1-[4-(2-oxo-2H-1-benzopyran-7-yloxy)-piperidin-1-ylcarbonyl]-ethylene];
poly[1-methyl-1-[6-[4-(2-oxo-2H-1-benzopyran-7-yloxycarbonyl)-phenoxy]-hexyloxycarbonyl]-ethylene];
poly[oxy-methyl-[4-[4-(2-oxo-2H-1-benzopyran-7-yloxycarbonyl)-phenoxy]-butyl]-silylene];
poly[1-methyl-1-[6-(2-oxo-2H-1-benzopyran-7-yloxy)-hexyloxycarbonyl]-ethylene]; and
poly[1-(2-oxo-2H-1-benzopyran-7-yl)-ethylene].

15. The copolymers
poly[-[2-(4-methyl-2-oxo-2H-1-benzopyran-6-yloxy)-ethoxycarbonyl]-1-methylethylene-co-1-[2-hydroxy-ethoxycarbonyl]-1--methyl-ethylene];
poly[-methyl-1-[2-(4-n-propyl-2-oxo-2H-1-benzopyran-7-yloxy)-ethoxycarbonyl]-ethylene-co-1-(2-hydroxy-ethoxycarbonyl)-1-methyl-ethylene];
poly[methyl-1-[2-(4-trifluoromethyl-2-oxo-2H-1-benzopyran-7-yloxy)-ethoxycarbonyl]-ethylene-co-1-(2-hydroxy-ethoxycarbonyl)-1-methyl-ethylene];
poly[1-[2-(3,4-dimethyl-2-oxo-2H-1-benzopyran-7-yloxy)-ethoxycarbonyl]-1-methyl-ethylene-co-1-(2-hydroxy-ethoxycarbonyl)-1-methyl-ethylene];
poly[-methyl-1-[2-(4-phenyl-2-oxo-2H-1-benzopyran-7-yloxy)-ethoxy-carbonyl]-ethylene-co-1-(2-hydroxy-ethoxycarbonyl)-1-methyl-ethylene];
poly[1-methyl-1-[2-(2-oxo-1,2-dihydro-quinolin-7-yloxy)-ethoxycarbonyl]-ethylene-co-1-(2-hydroxy-ethoxycarbonyl)-1-methyl-ethylene];
poly[1-methoxycarbonyl-1-methyl-ethylene-co-1-methyl-1-(2-oxo-2H-1-benzopyran-7-yloxycarbonyl)-ethylene];
poly[1-(2-hydroxy-ethoxycarbonyl)-1-methyl-ethylene-co-1-methyl-1-(2-oxo-2H-1-benzopyran-7-yloxycarbonyl)-ethylene];
poly[1-[6-[4-(4-methoxy-phenyloxycarbonyl)-phenoxy]-hexyloxycarbonyl]-1-methyl-ethylene-co-1-methyl-1-[6-[4-(2-oxo-2H-1-benzopyran-7-yloxy-carbonyl)-phenoxy]-hexyloxycarbonyl]-ethylene]; and
poly[1-methyl-1-[2-(4-nitro-phenoxy)-ethoxycarbonyl]-ethylene-co-1-methyl-1-[2-(2-oxo-2H-1-benzopyran-7-yloxy)-ethoxycarbonyl]-ethylene].

16. Use of the polymers according to any one of claims 1 to 15 in the production of orientation layers.

## Revendications

1. Polymère pour la préparation de dispositifs électrooptiques à cristaux liquides de formule générale 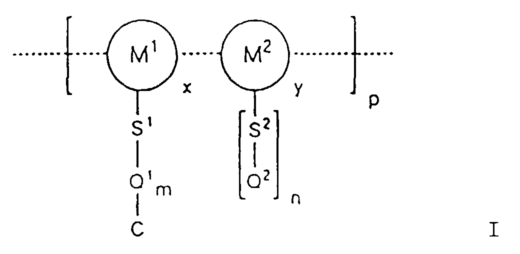 dans laquelle
M¹ et M² représentent des motifs monomères pour homo- ou copolymères;
x et y indiquent les fractions molaires des comonomères, pour lesquelles respectivement O<x≤1 et O<y≤1 et x + y = 1;
p représente 4 à 30000;
S¹ et S² représentent indépendamment l'un de l'autre des motifs d'espacement ou de simples liaisons de covalence;
Q¹ représente un motif de structure de formule
-A-(Z¹-B)_{z}- Z²- IIa;
Q² représente un motif de structure de formule
-A-(Z¹-B)_{z}- R¹ IIb;
A et B représentent indépendamment l'un de l'autre un groupe pyridin-2,5-diyle, pyrimidin-2,5-diyle, 1,4-cyclohexylène, 1,3-dioxan-2,5-diyle ou 1,4-phénylène éventuellement substitué;
Z¹ et Z² représentent indépendamment l'un de l'autre une simple liaison de covalence, -CH₂-CH₂-, -CH₂O-, -OCH₂-, -CONR-, -RNCO-, -COO- ou -OOC-;
R représente un atome d'hydrogène ou un groupe alkyle inférieur avec 1 - 5 atomes de carbone;
R¹ représente un atome d'hydrogène, un groupe alkyle ou alcoxy éventuellement substitué avec respectivement 1 à 12 atomes de carbone, un groupe cyano, nitro ou un atome d'halogène;
z représente 0 ou 1;
C un dérivé dimérisable photochimiquement de la coumarine ou de la quinolinone; et
m et n représentent indépendamment l'un de l'autre 0 ou 1,
dans laquelle [C-Q¹ₘ-S¹] ne doit pas représenter la 7-(N-méthacryloyl)aminocoumarine et la 3-[p-(N-méthacryloyl)-aminophényl]coumarine.

2. Polymère selon la revendication 1, caractérisé en ce que le dérivé (C) dimérisable photochimiquement de la coumarine ou de la quinolinone est représenté par un composé des formules générales 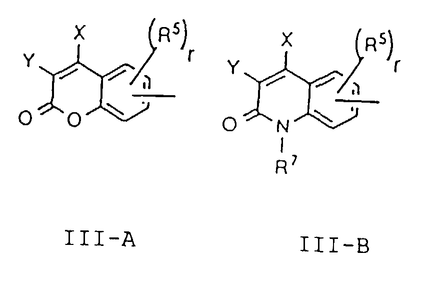 qui peuvent être couplés en position 5, 6, 7 ou 8 avec le groupe d'espacement S¹ ou Q¹, et dans lesquelles
R⁵ représente un groupe alkyle ou alcoxy éventuellement substitué ayant respectivement 1 à 12 atomes de carbone, un atome d'halogène, un groupe cyano ou nitro.
R⁷ représente un atome d'hydrogène ou un groupe alkyle inférieur avec 1 - 5 atomes de carbone;
X représente un atome d'hydrogène, un groupe alkyle ou alcoxy avec respectivement 1 à 8 atomes de carbone, trifluorométhyle ou phényle éventuellement substitué;
Y représente un atome d'hydrogène, un groupe alkyle ou alcoxy avec respectivement 1 à 8 atomes de carbone, cyano ou -COOR⁶;
R⁶ représente un groupe alkyle inférieur avec 1 - 5 atomes de carbone, et
r un nombre entier de 1 à 3.

3. Polymère selon la revendication 1 ou 2 de formule générale 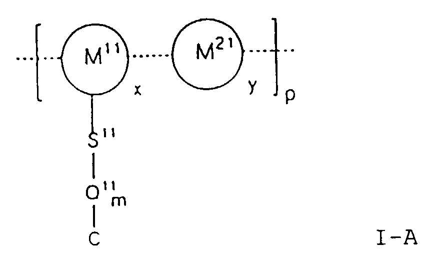 dans laquelle
M¹¹ et M²¹ représentent indépendamment l'un de l'autre un groupe éthylène, acrylate, méthacrylate, 2-chloroacrylate, acrylamide, méthacrylamide, 2-chloroacrylamide, styrène, acide maléique, siloxane, et M²¹ représente en plus également le groupe acrylonitrile ou méthacrylonitrile;
S¹¹ représente une simple liaison de covalence, -(CH₂)ₜ-, -O(CH₂)ₜ, -(CH₂)ₜO-, -O(CH₂)ₜO-, -OOC(CH₂)ₜ-, -COO(CH₂)ₜ-, -(CH₂)ₜCOO-, -(CH₂)ₜOOC-, -(CH₂)ₜNR²-, un groupe cycloalkylène avec 5 ou 6 atomes de carbone, pipéridindiyle, pipérazindiyle, phénylène, carbonate (-OCOO-), ester (-COO-, -OOC-), amide (-CONR², -R²NCO-), éther (-O-), amino (-NR²-) ou une combinaison de ces groupes;
R² représente un atome d'hydrogène ou un groupe alkyle inférieur avec 1 à 5 atomes de carbone;
t est un nombre entier de 1 à 6;
Q¹¹ représente
-A¹-(Z¹¹-B¹)_{z}-Z²- IIa-1
A¹ et B¹ représentent indépendamment l'un de l'autre un groupe 1,4-phénylène, pyridin-2,5-diyle, pyrimidin-2,5-diyle, 1,4-cyclohexylène ou 1,3-dioxan-2,5-diyle, avec la condition que pas plus d'un des cycles A¹ et B¹ représente un hétérocycle;
Z¹¹ représente une simple liaison de covalence, -CH₂CH₂-, -COO- ou -OOC-; et
p, C, Z² et z sont tels que définis aux revendications 1 ou 2.

4. Copolymère selon la revendication 3, caractérisé en ce que M¹¹ et M²¹ représentent indépendamment l'un de l'autre un groupe éthylène, acrylate, méthacrylate, acrylamide, méthacrylamide, styrène; et M²¹ représente en plus également le groupe acrylonitrile ou méthacrylonitrile; S¹¹ représente une simple liaison de covalence, -(CH₂)ₜ-, -O(CH₂)ₜ, -(CH₂)ₜO-, -O(CH₂)ₜO-, -OOC(CH₂)ₜ-, -COO(CH₂)ₜ-, -(CH₂)ₜCOO-, -(CH₂)ₜOOC-, -(CH₂)ₜNR²-, un groupe cycloalkylène avec 5 ou 6 atomes de carbone, phénylène, carbonate (-OCOO-), ester (-COO-, -OOC-), amide (-CONR², -R²NCO-), éther (-O-), amino (-NR²-) ou une combinaison de ces groupes; et A¹ et B¹ représentent indépendamment l'un de l'autre un groupe 1,4-phénylène, pyridin-2,5-diyle, pyrimidin-2,5-diyle ou 1,4-cyclohexylène, sous réserve que pas plus d'un des cycles A¹ et B¹ ne représente un hétérocycle.

5. Copolymère selon la revendication 3 ou 4, caractérisé en ce que M²¹ représente l'acrylate de méthyle, le méthacrylate de méthyle ou encore un acrylate d'hydroxyalkyle ou un méthacrylate d'hydroxyalkyle.

6. Copolymère selon l'une des revendications 1 à 5, dans lequel le dérivé (C) de la coumarine est couplé en position 6 ou 7 avec S¹¹ ou avec Z², de formules 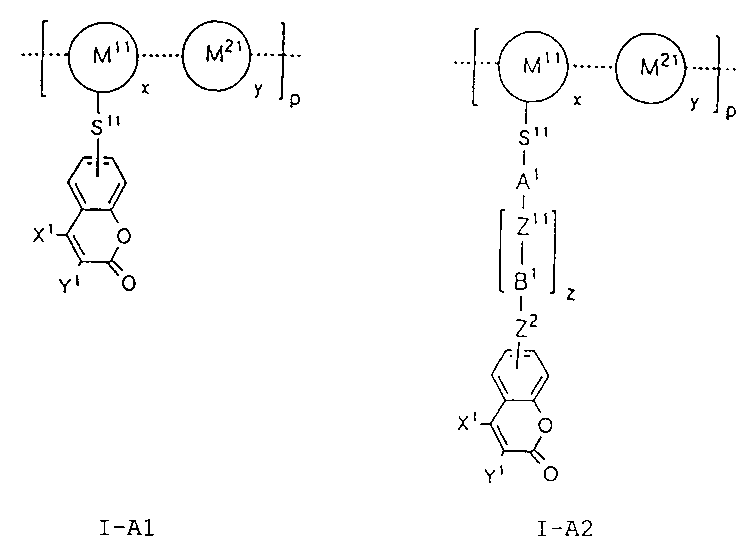 dans lesquelles
X¹ représente un atome d'hydrogène, un groupe alkyle ou alcoxy ayant respectivement 1 à 4 atomes de carbone ou trifluorométhyle;
Y¹ représente un atome d'hydrogène, un groupe alkyle ou alcoxy ayant respectivement 1 à 4 atomes de carbone; et
les autres symboles ont les significations données dans les revendications 1 à 4.

7. Copolymère selon la revendication 6, caractérisé en ce que X¹ représente un atome d'hydrogène, un groupe alkyle ou alcoxy ayant respectivement 1 à 4 atomes de carbone; Y¹ représente un atome d'hydrogène ou un groupe alkyle avec 1 à 4 atomes de carbone; M¹¹ et M²¹ représentent un groupe éthylène, acrylate, méthacrylate ou styrène; A¹ et B¹ un groupe phénylène ou cyclohexylène; et S¹¹ représente une simple liaison de covalence,-(CH₂)ₜ-, -(CH₂)ₜO-, -(CH₂)ₜCOO-, -(CH₂)ₜOOC-, -(CH₂)ₜNR²- ou un groupe amino (-NR²-).

8. Copolymère selon la revendication 7, caractérisé en ce que M²¹ représente un groupe acrylate d'hydroxy-alkyle ou méthacrylate d'hydroxyalkyle.

9. Polymère selon la revendication 1 ou 2, de formule 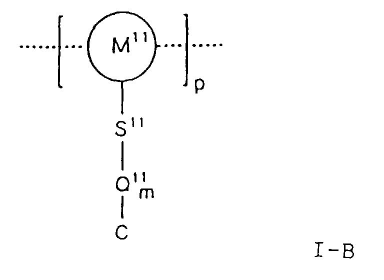 dans laquelle
M¹¹ représente un groupe éthylène, acrylate, méthacrylate, 2-chloroacrylate, acrylamide, méthacrylamide, 2-chloroacrylamide, styrène, acide maléique ou siloxane;
S¹¹ représente une simple liaison de covalence, -(CH₂)ₜ-, -O(CH₂)ₜ, -(CH₂)ₜO-, -O(CH₂)ₜO-, -OOC(CH₂)ₜ-, -COO(CH₂)ₜ-, -(CH₂)ₜCOO-,-(CH₂)ₜOOC-, -(CH₂)ₜNR²-, un groupe cycloalkylène avec 5 ou 6 atomes de carbone, pipéridindiyle, pipérazindiyle, phénylène, carbonate, (-OCOO-), ester (-COO-, -OOC-), amide (-CONR², -R²NCO-), éther (-O-), amino (-NR²-) ou une combinaison de ces groupes;
t est un nombre entier de 1 à 6;
Q¹¹ représente
-A¹-(Z¹¹-B¹)_{z}-Z²- IIa-1
A¹ et B¹ représentent indépendamment l'un de l'autre un groupe 1,4-phénylène, pyridin-2,5-diyle, pyrimidin-2,5-diyle, 1,4-cyclohexylène ou 1,3-dioxan-2,5-diyle, avec la condition que pas plus d'un des cycles A¹ et B¹ ne représente un hétérocycle;
Z¹¹ représente une simple liaison de covalence, -CH₂CH₂-, -COO- ou -OOC-; et
R², p, C, Z² et z sont tels que définis aux revendications 1 ou 2.

10. Homopolymère selon la revendication 9, caractéri-sé en ce que M¹¹ représente un groupe éthylène, acrylate, méthacrylate, acrylamide, méthacrylamide, styrène; S¹¹ représente une simple liaison de covalence, -(CH₂)ₜ-,-O(CH₂)ₜ, -(CH₂)ₜO-, -O(CH₂)ₜO-, -OOC(CH₂)ₜ-, -COO(CH₂)ₜ-, -(CH₂)ₜCOO-, -(CH₂)ₜOOC-, -(CH₂)ₜNR²-, un groupe cycloalkylène avec 5 ou 6 atomes de carbone, phénylène, carbonate, (-OCOO-), ester (-COO-, -OOC-), amide (-CONR², -R²NCO-), éther (-O-), amino (-NR²-) ou une combinaison de ces groupes; et A¹ et B¹ représentent indépendamment l'un de l'autre un groupe 1,4-phénylène, pyridin-2,5-diyle, pyrimidin-2,5-diyle ou 1,4-cyclohexylène, sous réserve que pas plus d'un des cycles A¹ et B¹ ne représente un hétérocycle.

11. Homopolymère selon l'une des revendications 1, 2, 9 ou 10, dans lequel le dérivé (C) de la coumarine est couplé en position 6 ou 7 avec S¹¹ ou avec Z², de formules 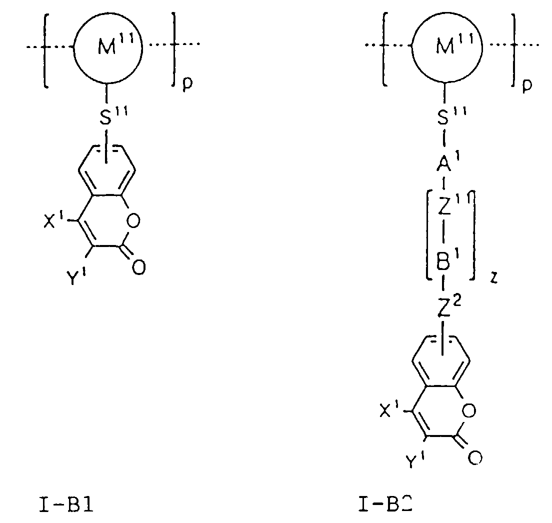 dans lesquelles
X¹ représente un atome d'hydrogène, un groupe alkyle ou alcoxy ayant respectivement 1 à 4 atomes de carbone ou trifluorométhyle;
Y¹ représente un atome d'hydrogène, un groupe alkyle ou alcoxy ayant respectivement 1 à 4 atomes de carbone; et
les autres symboles ont les significations données dans les revendications 1, 2, 9 ou 10.

12. Polymère selon la revendication 11, caractérisé en ce que X¹ représente un atome d'hydrogène, un groupe alkyle ou alcoxy ayant respectivement 1 à 4 atomes de carbone; Y¹ représente un atome d'hydrogène ou un groupe alkyle ayant 1 à 4 atomes de carbone; M¹¹ représente un groupe éthylène, acrylate, méthacrylate ou styrène; A¹ et B¹ représentent un groupe phénylène ou cyclohexylène; et S¹¹ représente une simple liaison de covalence, -(CH₂)ₜ-, -(CH₂)ₜO-, -(CH₂)ₜCOO-, -(CH₂)ₜOOC-, -(CH₂)ₜNR²- ou un groupe amino (-NR²-).

13. Polymère selon une des revendications 2 à 12, caractérisé en ce que le dérivé (C) de la coumarine de formule III-A est couplé en position 7 avec S¹ ou S¹¹, ou avec Z².

14. Les homopolymères
Poly[1-méthyl-1-(2-oxo-2H-1-benzopyran-7-yloxycarbonyl)-éthylène];
Poly[1-méthyl-1-(4-méthyl-2-oxo-2H-1-benzopyran-7-yloxycarbonyl)-éthylène];
Poly[1-méthyl-1-[2-(2-oxo-2H-1-benzopyran-7-yloxy)-éthoxycarbonyl]-éthylène];
Poly[1-[2-(3-éthoxycarbonyl-2-oxo-2H-1-benzopyran-7-yloxy)-éthoxycarbonyl]-1-méthyl-éthylène];
Poly[1-méthyl-1-[2-(4-méthyl-2-oxo-2H-1-benzopyran-7-yloxy)-éthoxycarbonyl]-éthylène];
Poly[1-[2-(4-éthyl-2-oxo-2H-1-benzopyran-7-yloxy)-éthoxycarbonyl]-1-méhyl-éthylène];
Poly[1-méthyl-1-[2-(4-trifluorométhyl-2-oxo-2H-1-benzopyran-7-yloxy)-éthoxycarbonyl]-éthylène];
Poly[1-[2-(3-chloro-4-méthyl-2-oxo-2H-1-benzopyran-7-yloxy)-éthoxycarbonyl]-1-méthyl-éthylène];
Poly[1-méthyl-1-[2-(4-méthyl-8-nitro-2-oxo-2H-1-benzopyran-7-yloxy)-éthoxycarbonyl]-éthylène];
Poly[1-méthyl-1-[2-(3,4,8-triméthyl-2-oxo-2H-1-benzopyran-7-yloxy)-éthoxycarbonyl]-éthylène];
Poly[1-méthyl-1-[4-(2-oxo-2H-1-benzopyran-7-yloxy)-pipéridin-1-ylcarbonyl]-éthylène];
Poly[1-méthyl-1-[6-[4-(2-oxo-2H-1-benzopyran-7-yloxycarbonyl)-phénoxy]-hexyloxycarbonyl]-éthylène];
Poly[oxy-méthyl-[4-[4-(2-oxo-2H-1-benzopyran-7-yloxycarbonyl)-phénoxy]-butyl]-silylène];
Poly[1-méthyl-1-[6-(2-oxo-2H-1-benzopyran-7-yloxy)-hexyloxycarbonyl]-éthylène]; et
Poly[1-(2-oxo-2H-1-benzopyran-7-yl)-éthylène].

15. Les copolymères
Poly[1-[2-(4-méthyl-2-oxo-2H-1-benzopyran-6-yloxy)-éthoxycarbonyl]-1-méthyl-éthylène-co-1-[2-hydroxy-éthoxycarbonyl]-1-méthyl-éthylène];
Poly[1-méthyl-1-[2-(4-n-propyl-2-oxo-2H-1-benzopyran-7-yloxy)-éthoxycarbonyl]-éthylène-co-1-(2-hydroxy-éthoxycarbonyl)-1-méthyl-éthylène];
Poly[1-méthyl-1-[2-(4-trifluorométhyl-2-oxo-2H-1-benzopyran-7-yloxy)-éthoxycarbonyl]-éthylène-co-1-(2-hydroxyéthoxycarbonyl)-1-méthyl-éthylène];
Poly[1-[2-(3,4-diméthyl-2-oxo-2H-1-benzopyran-7-yloxy)-éthoxycarbonyl]-1-méthyl-éthylène-co-1-(2-hydroxy-éthoxycarbonyl)-1-méthyl-éthylène];
Poly[1-méthyl-1-[2-(4-phényl-2-oxo-2H-1-benzopyran-7-yloxy)-éthoxycarbonyl]-éthylène-co-1-(2-hydroxy-éthoxycarbonyl)-1-méthyl-éthylène];
Poly[1-méthyl-1-[2-(2-oxo-1,2-dihydro-quinoléin-7-yloxy)-éthoxycarbonyl]-éthylène-co-1-(2-hydroxy-éthoxycarbonyl)-1-méthyl-éthylène];
Poly[1-méthoxycarbonyl-1-méthyl-éthylène]-co-1-méthyl-1-(2-oxo-2H-1-benzopyran-7-yloxycarbonyl]-éthylène];
Poly[1-(2-hydroxy-éthoxycarbonyl)-1-méthyl-éthylène-co-1-méthyl-1-(2-oxo-2H-1-benzopyran-7-yloxycarbonyl)-éthylène];
Poly[1-[6-[4-(4-méthoxy-phényloxycarbonyl)-phénoxy]-hexyloxycarbonyle]-1-méthyl-éthylène-co-1-méthyl-1-[6-[4-(2-oxo-2H-1-benzopyran-7-yloxycarbonyl]-phénoxy]-hexyloxycarbonyl]-éthylène]; et
Poly[1-méthyl-1-[2-(4-nitro-phénoxy)-éthoxycarbonyl]-éthylène-co-1-méthyl-1-[2-(2-oxo-2H-1-benzopyran-7-yloxy)-éthoxycarbonyl]-éthylène].

16. Utilisation d'un polymère selon l'une des revendications 1 à 15 pour la préparation de couches d'orientation.
